(19) Europäisches Patentamt
European Patent Office
Office européen des brevets

(11) **EP 4 753 352 A1**

(12) **EUROPEAN PATENT APPLICATION**
published in accordance with Art. 153(4) EPC

(43) Date of publication:
03.06.2026 Bulletin 2026/23

(21) Application number: 24845993.5

(22) Date of filing: 22.07.2024

(51) International Patent Classification (IPC):
*H04W 72/25* (2023.01)    *H04B 7/06* (2006.01)
*H04W 72/0446* (2023.01)    *H04W 72/0453* (2023.01)
*H04L 5/00* (2006.01)    *H04W 92/18* (2009.01)

(52) Cooperative Patent Classification (CPC):
H04B 7/06; H04L 5/00; H04W 72/0446;
H04W 72/0453; H04W 72/25; H04W 92/18

(86) International application number:
PCT/KR2024/010578

(87) International publication number:
WO 2025/023691 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023  KR 20230096889
25.07.2023  KR 20230096902
27.07.2023  KR 20230098309

(71) Applicant: LG Electronics Inc.
Yeongdeungpo-gu
Seoul 07336 (KR)

(72) Inventors:
• KO, Woosuk
Seoul 06772 (KR)
• SEO, Hanbyul
Seoul 06772 (KR)

(74) Representative: Maikowski & Ninnemann
Patentanwälte Partnerschaft mbB
Postfach 15 09 20
10671 Berlin (DE)

(54) **TRANSMISSION RESOURCE SELECTION METHOD AND DEVICE FOR COUPLING OF INTER-TERMINAL REFERENCE SIGNAL**

(57)    An operating method of a first device (100) in a wireless communication system is presented. The method comprises the steps of: transmitting first control information related to the transmission of a first inter-device reference signal to a second device (200) through a control channel, the first control information including information about a first resource and a combining ID related to the first resource; and transmitting the first inter-device reference signal to the second device on the basis of the first resource, wherein a plurality of resources including the first resource, which are related to the combining ID, can be combined.

## FIG. 17

transmitting, to a second device, first control information related to a transmission of a first inter-device reference signal through a control channel — S1710

transmitting, to a second device, a first inter-device reference signal, based on a first resource — S1720

Description

## TECHNICAL FIELD

This disclosure relates to a wireless communication system.

## BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

## DISCLOSURE

### TECHNICAL SOLUTION

According to an embodiment of the present disclosure, a method for performing, by a first device, wireless communication may be proposed. For example, the method may comprise: transmitting, to a second device, first control information related to a transmission of a first inter-device reference signal through a control channel, wherein the first control information may include a combining identifier, ID, related to a first resource and information for the first resource; and transmitting, to the second device, the first inter-device reference signal, based on the first resource, wherein combining may be performed for a plurality of resources including the first resource, related to the combining ID.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: transmitting, to a second device, first control information related to a transmission of a first inter-device reference signal through a control channel, wherein the first control information may include a combining identifier, ID, related to a first resource and information for the first resource; and transmitting, to the second device, the first inter-device reference signal, based on the first resource, wherein combining may be performed for a plurality of resources including the first resource, related to the combining ID.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: transmitting, to a second UE, first control information related to a transmission of a first inter-UE reference signal through a control channel, wherein the first control information may include a combining identifier, ID, related to a first resource and information for the first resource; and transmitting, to the second UE, the first inter-UE reference signal, based on the first resource, wherein combining may be performed for a plurality of resources including the first resource, related to the combining ID.

According to an embodiment of the present disclosure, a non-transitory computer-readable storage medium storing instructions may be proposed. For example, the instructions, based on being executed, may cause a first device to: transmit, to a second device, first control information related to a transmission of a first inter-device reference signal through a control channel, wherein the first control information may include a combining identifier, ID, related to a first resource and information for the first resource; and transmit, to the second device, the first inter-device reference signal, based on the first resource, wherein combining may be performed for a plurality of resources including the first resource, related to the combining ID.

According to an embodiment of the present disclosure, a method for performing, by a second device, wireless communication may be proposed. For example, the method may comprise: receiving, from a first device, first control information related to a transmission of a first inter-device reference signal through a control channel, wherein the first control information may include a combining identifier, ID, related to a first resource and information for the first resource; receiving, from the first device, the first inter-device reference signal based on the first resource; receiving a plurality of inter-device reference signals based on a plurality of resources, related to the combining ID; and performing combining for the first inter-device reference signal and the plurality of inter-device reference signals, based on the first inter-device reference signal and the plurality of inter-device reference signals being related to the combining ID.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, first control information related to a transmission of a first inter-device reference signal through a control channel, wherein the first control information may include a combining identifier, ID, related to a first resource and information for the first resource; receiving, from the first device, the first inter-device reference signal based on the first resource; receiving a plurality of inter-device reference signals based on a plurality of resources, related to the combining ID; and performing combining for the first inter-device reference signal and the plurality of inter-device reference signals, based on the first inter-device reference signal and the plurality of inter-device reference signals being related to the combining ID.

**BRIEF DESCRIPTION OF THE DRAWINGS**

FIG. 1 shows a communication structure that can be provided in a 6G system, according to one embodiment of the present disclosure.

FIG. 2 shows an electromagnetic spectrum, according to one embodiment of the present disclosure.

FIG. 3 shows an example of an NTN typical scenario based on a transparent payload, according to one embodiment of the present disclosure.

FIG. 4 shows an example of an NTN typical scenario based on a regenerative payload, according to one embodiment of the present disclosure.

FIG. 5 shows an example of a sensing operation, according to one embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows an example of an architecture in a 5G system in which positioning for a UE connected to a Next Generation-Radio Access Network (NG-RAN) or E-UTRAN is possible, according to an embodiment of the present disclosure.

FIG. 10 shows an implementation example of a network for measuring a position of a UE, according to an embodiment of the present disclosure.

FIG. 11 shows an example of a protocol layer used to support LTE Positioning Protocol (LPP) message transmission between an LMF and a UE, according to an embodiment of the present disclosure.

FIG. 12 shows an example of a protocol layer used to support NR Positioning Protocol A (NRPPa) PDU transmission between an LMF and an NG-RAN node, according to an embodiment of the present disclosure.

FIG. 13 shows an Observed Time Difference Of Arrival (OTDOA) positioning method according to an embodiment of the present disclosure.

FIG. 14 shows a double-side RTT, according to one embodiment of the present disclosure.

FIG. 15 shows a procedure in which a device that receives an inter-device reference signal performs a combining operation, according to an embodiment of the present disclosure.

FIG. 16 shows resources related to the same combining ID within different slots, according to an embodiment of the present disclosure.

FIG. 17 shows a procedure for a first device to perform wireless communication, according to one embodiment of the present disclosure.

FIG. 18 shows a procedure for a second device to perform wireless communication, according to one embodiment of the present disclosure.

FIG. 19 shows a communication system 1, based on an embodiment of the present disclosure.

FIG. 20 shows wireless devices, based on an embodiment of the present disclosure.

FIG. 21 shows a signal process circuit for a transmission signal, based on an embodiment of the present disclosure.

FIG. 22 shows another example of a wireless device, based on an embodiment of the present disclosure.

FIG. 23 shows a hand-held device, based on an embodiment of the present disclosure.

FIG. 24 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

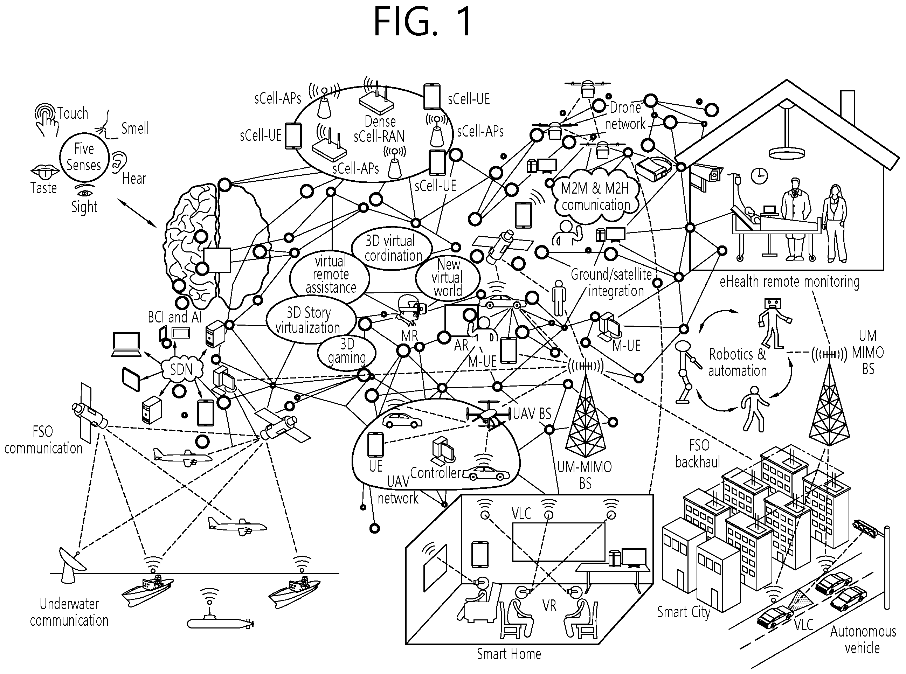

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

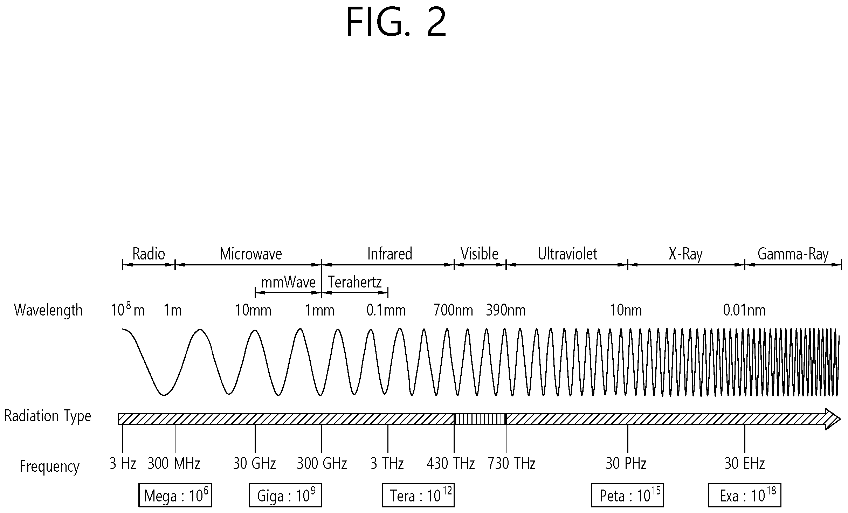

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network

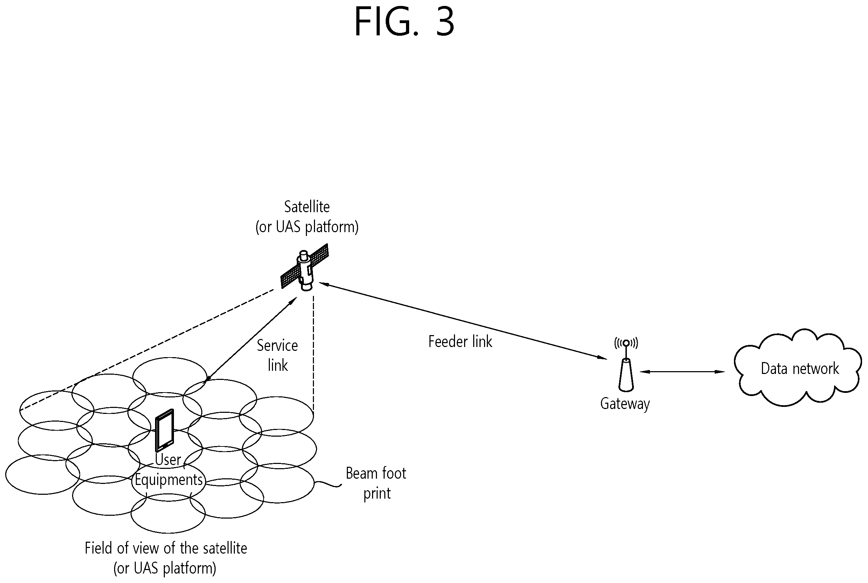

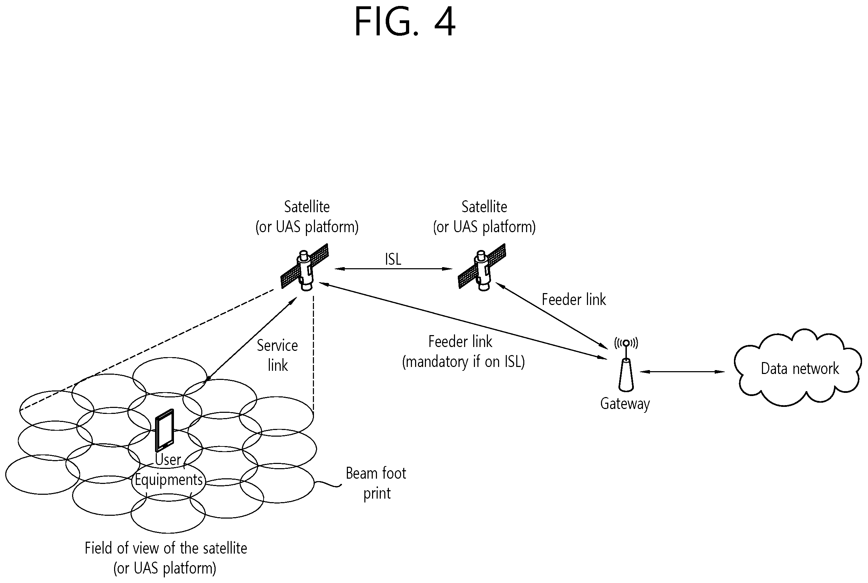

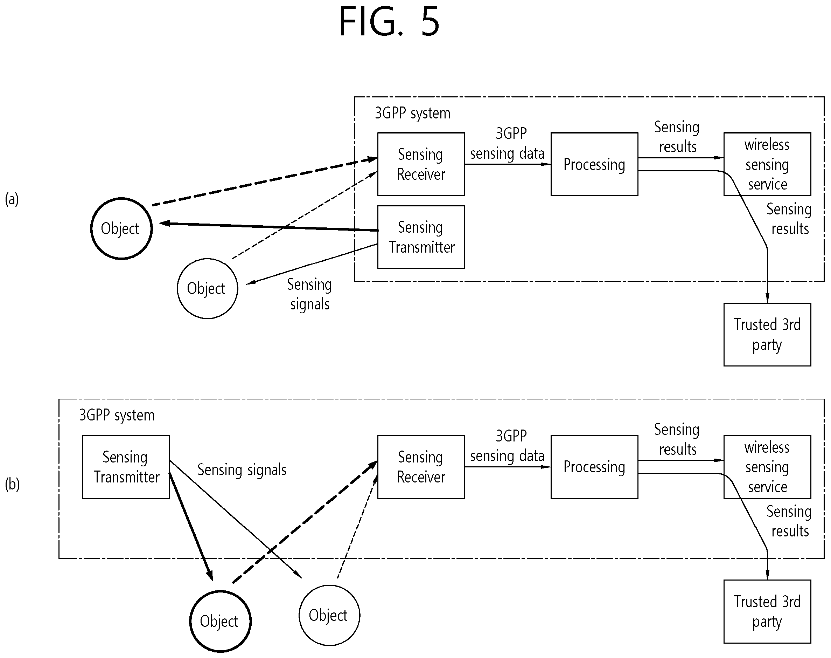

- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slot}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

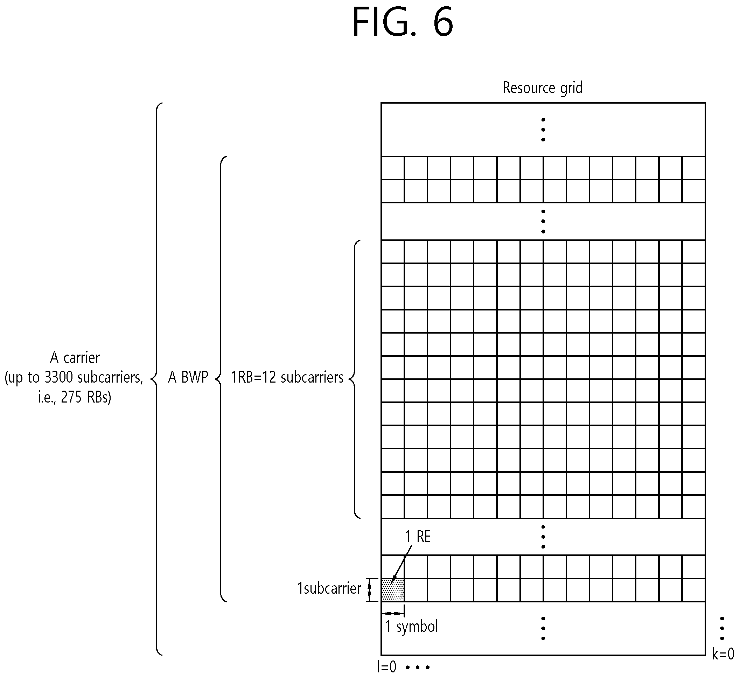

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

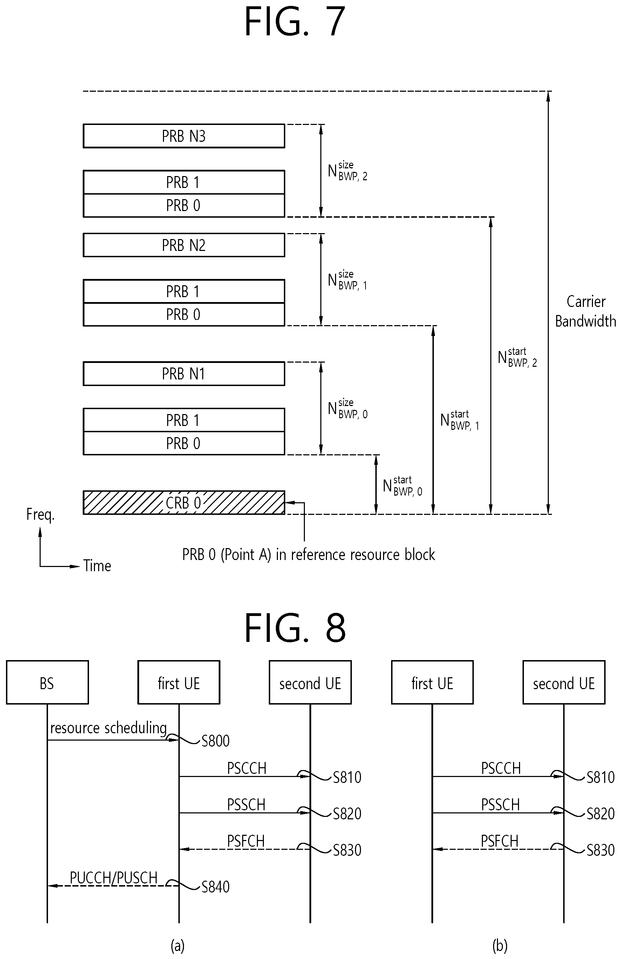

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Hereinafter, a UE procedure for determining a subset of resources to be reported to a higher layer in inter-UE physical shared channel (e.g., PSSCH) resource selection in sidelink resource allocation mode 2 will be described.

In resource allocation mode 2, the higher layer can request the UE to determine a subset of resources from which the higher layer will select resources for inter-UE physical channel (e.g., PSSCH/PSCCH) transmission. To trigger this procedure, in slot n, the higher layer provides the following parameters for this inter-UE physical channel (e.g., PSSCH/PSCCH) transmission:

- the resource pool from which the resources are to be reported;
- L1 priority, $prio_{TX}$;

- the remaining packet delay budget;
- the number of sub-channels to be used for the inter-UE physical channel (e.g., PSSCH/PSCCH) transmission in a slot, $L_{sub}CH$;
- optionally, the resource reservation interval, $P_{rsvpTX}$, in units of msec.
- if the higher layer requests the UE to determine a subset of resources from which the higher layer will select resources for inter-UE physical channel (e.g., PSSCH/PSCCH) transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r''_i$ - $T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the inter-UE physical shared channel (e.g., PSSCH)-RSRP or inter-UE physical control channel (e.g., PSCCH)-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList $(prio_{TX})$ converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:
$(t'^{SL}_0, t'^{SL}_1, t'^{SL}_2, ...)$ may denote the set of slots which belongs to the sidelink resource pool.

For example, a UE may select a set of candidate resources (Sa) based on a procedure described below. For example, when resource (re)selection is triggered, a UE may select a candidate resource set (Sa) based on a procedure described below. For example, when re-evaluation or pre-emption is triggered, a UE may select a candidate resource set (Sa) based on a procedure described below.

The procedure below may be used.

1) A candidate single slot resource for transmission $R_{x,y}$ is defined as a set of $L_{subCH}$ contiguous subchannels with subc hannel x+j in slot t'^SL_y where j=0, ..., $L_{subCH}$. The UE shall assume that any set of $L_{subCH}$ contiguous subchannels included in t he corresponding resource pool within the time interval [n + $T_1$, n + $T_2$] correspond to one candidate single slot resource.

selection of $T_1$ is up to UE implementation under $0 \le T_1 \le$ T^SL_proc,1, where T^SL_proc,1 may be predefined. if $T_{2min}$ is shorter than the remaining packet delay budget (in slots) then $T_2$ is up to UE implementation subje ct to $T_{2min} \le T_2 \le$ remaining packet delay budget (in slots); otherwise $T_2$ is set to the remaining packet delay budget (i n slots).
The total number of candidate single-slot resources may be denoted by $M_{total}$.

2) The sensing window is defined by the range of slots [n-$T_0$, n-T^SL_proc,0) where $T_0$ may be predefined above and T^SL_proc,0 may be predefined. The UE shall monitor slots which belongs to a sidelink resource pool within the sensing window except for those in which its own transmissions occur. The UE shall perform the behaviour in the following steps based on inter-UE physical control channel (e.g., PSCCH) decoded and RSRP measured in these slots.

3) The internal parameter $Th(p_i, p_j)$ may be set to the corresponding value of RSRP threshold indicated by the i-th field in sl-Thres-RSRP-List, where $i = p_i + (p_j - 1) * 8$.

4) The set $S_A$ may be initialized to the set of all the candidate single-slot resources.

5) The UE shall exclude any candidate single-slot resource $R_{x, y}$ from the set $S_A$ if it meets all the following conditions:

the UE has not monitored slot $t'^\wedge SL\_m$ in Step 2.

for any periodicity value allowed by the higher layer parameter sl-ResourceReservePeriodList and a hypothetical SCI format 1-A received in slot $t'^\wedge SL\_m$ with 'Resource reservation period' field set to that periodicity value and indicating all subchannels of the resource pool in this slot, condition c in step 6 would be met.

5a) If the number of candidate single-slot resources $R_{x, y}$ remaining in the set $S_A$ may be smaller than $X*M_{total}$, the set $S_A$ may be initialized to the set of all the candidate single-slot resources as in step 4.

6) The UE shall exclude any candidate single-slot resource $R_{x, y}$ from the set $S_A$ if it meets all the following conditions:

a) the UE receives an SCI format 1-A in slot $t'^\wedge SL\_m$, and 'Resource reservation period' field, if present, and 'Priority' field in the received SCI format 1-A indicate the values $P_{rsvp\_RX}$ and $prio_{RX}$, respectively;

b) the RSRP measurement performed for the received SCI format 1-A, is higher than $Th(prio_{RX}, prio_{TX})$;

c) the SCI format received in slot $t'^\wedge SL\_m$ or the same SCI format which, if and only if the 'Resource reservation period' field is present in the received SCI format 1-A, may be assumed to be received in slot(s) $t'^\wedge SL\_m+q*P'_{rsvp\_RX}$ determines the set of resource blocks and slots which overlaps with $R_{x, y+j*(P'\_rsvp\_TX)}$ for $q=1, 2, ..., Q$ and $j=0, 1, ..., C_{resel}-1$. Here, $P'_{rsvp\_RX}$ may be $P_{rsvp\_RX}$ converted to units of logical slots, $Q$ may be an up rounded value of $T_{scal}/R_{rsvp\_RX}$ if $P_{rsvp\_RX} < T_{scal}$ and $n'-m \le P'_{rsvp\_RX}$, where $t'^\wedge SL\_n'=n$ if slot $n$ belongs to the set $(t'^\wedge SL\_0, t'^\wedge SL\_1, ..., t'^\wedge SL\_T'_{max}-1)$, otherwise slot $t'^\wedge SL\_n'$ may be the f irst slot after slot $n$ belonging to the set $(t'^\wedge SL\_0, t'^\wedge SL\_1, ..., t'^\wedge SL\_T'_{max}-1)$; otherwise $Q=1$. $T_{scal}$ may be set to select ion window size $T_2$ converted to units of msec.

7) If the number of candidate single-slot resources remaining in the set $S_A$ is smaller than $X \cdot M_{total}$, then $Th(p_i, p_j)$ may be increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executin g steps 1)-7), i.e. including all necessary increments for reaching $X \cdot M_{total}$, and

- the associated priority $prio_{RX}$, satisfies one of the following conditions:

-- sl-PreemptionEnable may be provided and may be equal to 'enabled' and $prio_{TX} > prio_{RX}$

-- sl-PreemptionEnable may be provided and may be not equal to 'enabled', and $prio_{RX} < prio_{pre}$ and pri $o_{TX} > prio_{RX}$.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChanel}+1)$ $(2N^{SL}_{subChannel}+1)/6)$ bits when the value of the higher layer parameter sl-MaxNumPerReserve is configured to 3

- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 3
- Beta _offset indicator - 2 bits as provided by higher layer parameter sl-BetaOffsets2ndSCI
- Number of DMRS port - 1 bit as defined in Table 4
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 3]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 4]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 5
- CSI request - 1 bit

[Table 5]

| Value of Cast type indicator | Cast type |
|---|---|
| 00 | Broadcast |
| 01 | Groupcast when HARQ-ACK information includes ACK or NACK |

(continued)

| Value of Cast type indicator | Cast type |
| --- | --- |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

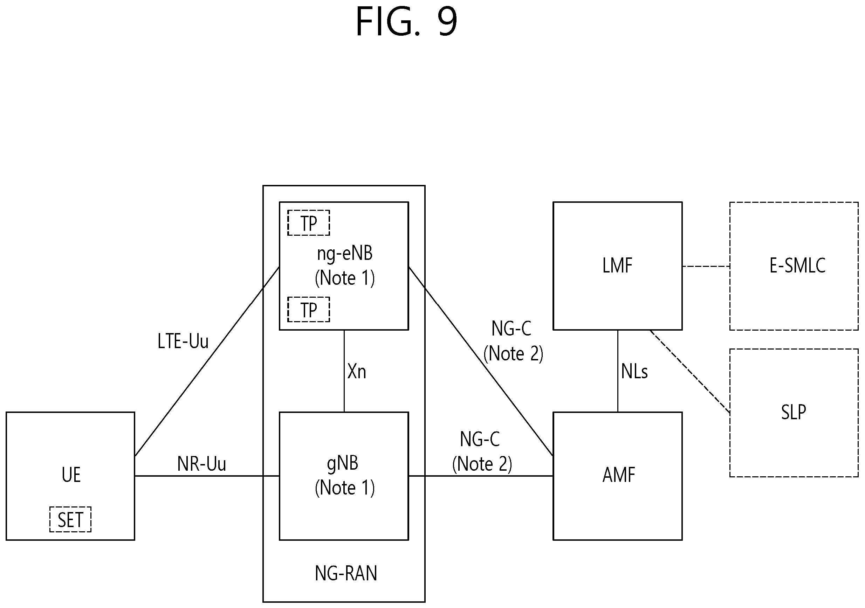

FIG. 9 shows an example of an architecture in a 5G system in which positioning for a UE connected to a Next Generation-Radio Access Network (NG-RAN) or E-UTRAN is possible, according to an embodiment of the present disclosure. The embodiment of FIG. 9 may be combined with various embodiments of the present disclosure.

Referring to FIG. 9, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated position or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for position estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location center (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a position estimation value for the target UE and accuracy of position estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a position of the UE. For example, the UE may include an independent positioning function such as a global positioning system (GPS), and may report the position of the UE independent of NG-RAN transmission. Positioning information obtained independently as such may be utilized as assistance information of the positioning information obtained from the network.

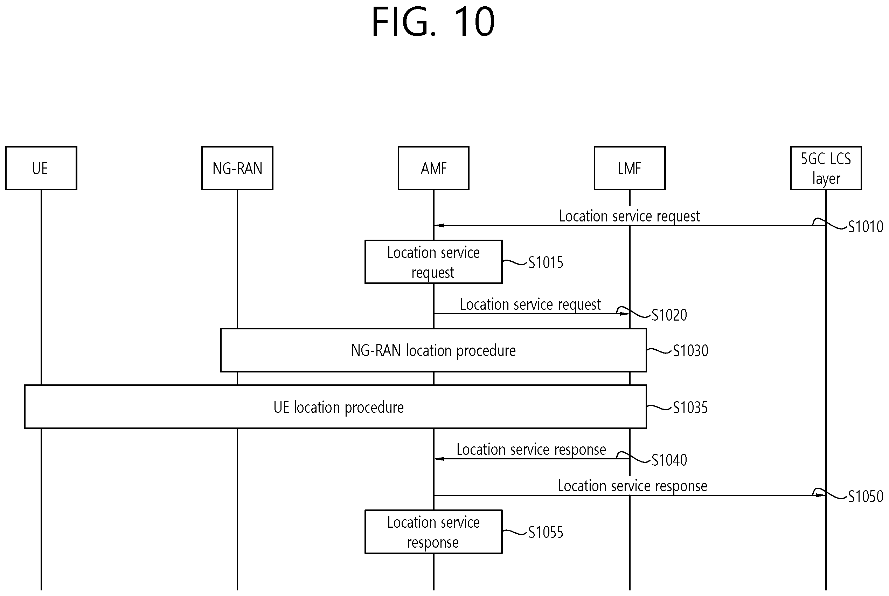

FIG. 10 shows an implementation example of a network for measuring a position of a UE, according to an embodiment of the present disclosure. The embodiment of FIG. 10 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 10. That is, it may be assumed in FIG. 10 that the UE is in a connected mode. However, due to signaling and data inactivation or the like, the signaling connection may be released by NG-RAN while a positioning process is performed.

A network operation process for measuring a position of a UE will be described in detail with reference to FIG. 10. In step S1010, a 5GC entity such as GMLC may request a serving AMF to provide a location service for measuring a position of a target UE. However, even if the GMLC does not request for the location service, based on step S1015, the serving AMF may determine that the location service for measuring the position of the target UE is required. For example, to measure the position of the UE for an emergency call, the serving AMF may determine to directly perform the location service.

Thereafter, the AMF may transmit the location service request to an LMF based on step S1020, and the LMF may start location procedures to obtain position measurement data or position measurement assistance data together with a serving ng-eNB and a serving gNB, according to step S1030. Additionally, based on step S1035, the LMF may start location procedures for downlink positioning together with the UE. For example, the LMF may transmit assistance data defined in 3GPP TS 36.355, or may obtain a position estimation value or a position measurement value. Meanwhile, step S1035 may be performed additionally after step S1030 is performed, or may be performed instead of step S1030.

In step S1040, the LMF may provide a location service response to the AMF. In addition, the location service response may include information on whether position estimation of the UE is successful and a position estimation value of the UE. Thereafter, if the procedure of FIG. 10 is initiated by step S1010, in step S1050, the AMF may transfer the location service response to a 5GC entity such as GMLC, and if the procedure of FIG. 10 is initiated by step S1015, in step S1055, the AMF may use the location service response to provide a location service related to an emergency call or the like.

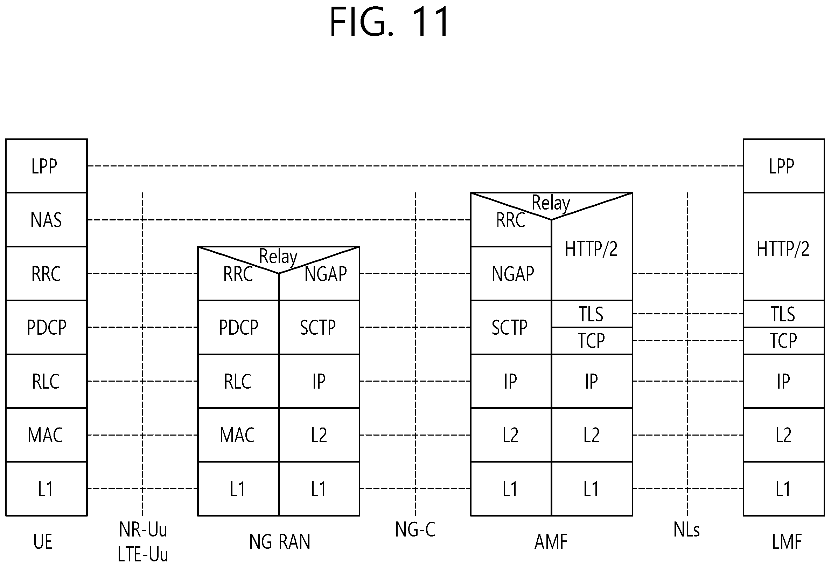

FIG. 11 shows an example of a protocol layer used to support LTE Positioning Protocol (LPP) message transmission between an LMF and a UE, according to an embodiment of the present disclosure. The embodiment of FIG. 11 may be combined with various embodiments of the present disclosure.

An LPP PDU may be transmitted through a NAS PDU between an AMF and the UE. Referring to FIG. 11, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

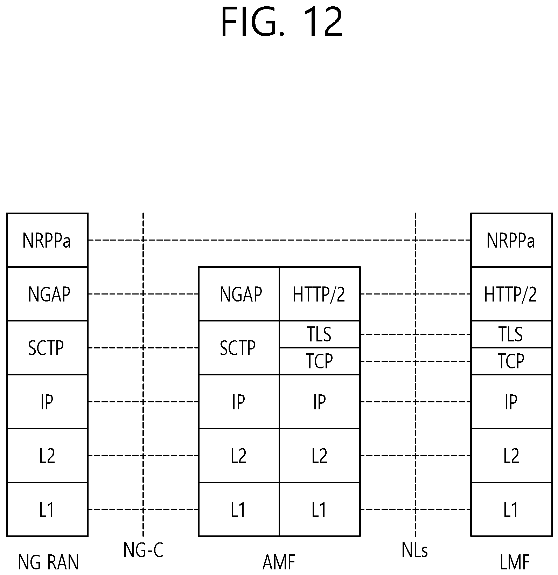

FIG. 12 shows an example of a protocol layer used to support NR Positioning Protocol A (NRPPa) PDU transmission between an LMF and an NG-RAN node, according to an embodiment of the present disclosure. The embodiment of FIG. 12 may be combined with various embodiments of the present disclosure.

Referring to FIG. 12, the NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., position measurement information or the like), and a second type is a non UE associated procedure for transferring information (e.g., , gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

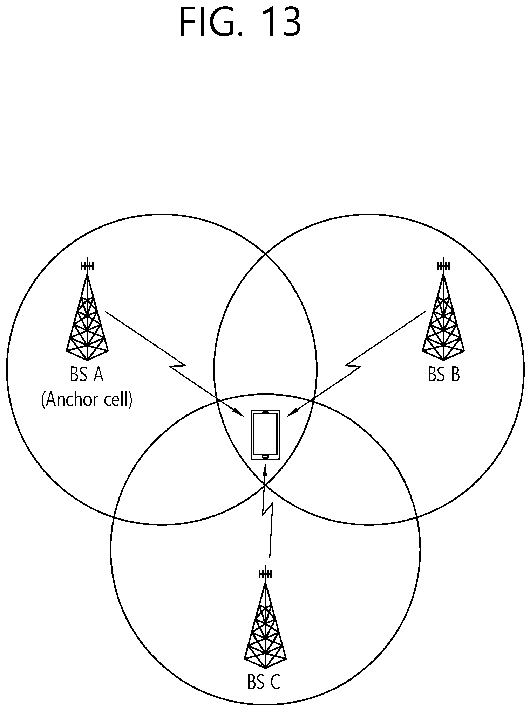

FIG. 13 shows an Observed Time Difference Of Arrival (OTDOA) positioning method according to an embodiment of the present disclosure. The embodiment of FIG. 13 may be combined with various embodiments of the present disclosure.

Referring to FIG. 13, the OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a position of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a position of a UE. In this case, since accuracy and/or uncertainty for each TOA measurement may be present, the estimated position of the UE may be known as a specific range based on measurement uncertainty.

For example, RSTD for two TPs may be calculated based on Equation 1.

[Equation 1]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, $\{x_t, y_t\}$ may be a (unknown) coordinate of a target UE, $\{x_i, y_i\}$ may be a coordinate of a (known) TP, and $\{x_1, y_1\}$ may be a coordinate of a reference TP (or another TP). Herein, $(T_i-T_1)$ may be referred to as "real time differences (RTDs)" as a transmission time offset between two TPs, and $n_i$, $n_1$ may represent values related to UE TOA measurement errors.

(2) E-CID (Enhanced Cell ID)

In a cell ID (CID) positioning method, a position of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE position estimation value. In the E-CID positioning method, although some of the measurement methods which are the same as those used in a measurement control system of an RRC protocol may be used, additional measurement is not performed in general only for position measurement of the UE. In other words, a measurement configuration or a measurement control message may not be provided additionally to measure the position of the UE. Also, the UE may not expect that an additional measurement operation only for position measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

$$\text{TADV Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

Meanwhile, AoA may be used to measure a direction of the UE. The AoA may be defined as an estimation angle with respect to the position of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a position of a UE by estimating an arrival time of SRS. When calculating an estimated SRS arrival time, the position of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

(4) RTT (Round Trip Time)

RTT is a positioning technology that may measure the distance between two entities even if the target entity and the server entity are out of time synchronization. If RTT is performed with multiple server entities, the distances from each server entity may be measured separately. And, by drawing a circle using the measured distances from each server entity, absolute positioning for the target entity may be performed by the point where each circle intersects. For example, it may be referred to as multi-RTT.

The RTT between two entities can be performed as follows. Entity #1 may transmit PRS #1 at t1, and Entity #2 may receive the RRS #1 at t2. After the PRS #1 is received by the Entity #2, Entity #2 may transmit PRS #2 at t3, and Entity #1 may receive the PRS #2 at t4. In this case, the distance D between the two entities can be derived as follows.

[Equation 2]

$$D = c \times \{ (t4 - t1) - (t3 - t2) \}/ 2 \; (Here, C \; is \; the \; speed \; of \; light)$$

For RTT between UE and gNB, the distance between UE and gNB can be derived based on Equation 2 above using the UE Rx - Tx time difference and gNB Rx - Tx time difference in the table below.

(5) double-side RTT

Double-side RTT is a positioning technology that can measure the distance between two entities even when there is a sampling clock frequency offset between the target and server entities.

The method for performing a double-sided RTT between two entities is as follows,

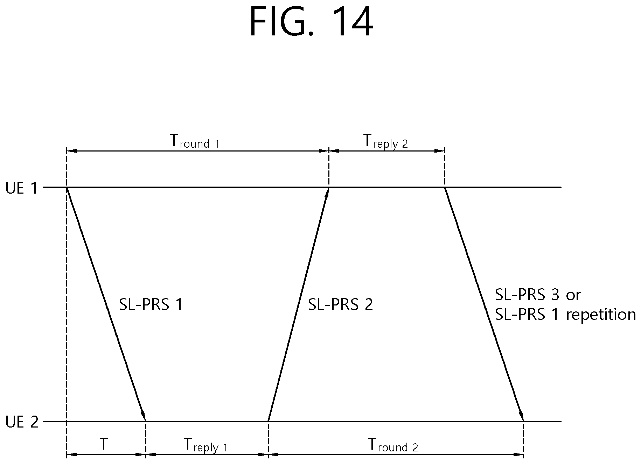

FIG. 14 shows a double-side RTT, according to one embodiment of the present disclosure. The embodiment of FIG. 14 may be combined with various embodiments of the present disclosure.

Double-side RTT is widely used in ultra-wideband (UWB) positioning and may reduce the impact of clock errors. Referring to FIG. 14, the propagation delay T may be estimated from two measurement values (i.e., $T_{round1}$, $T_{round2}$, $T_{reply1}$, $T_{reply2}$). For example, the propagation delay T may be estimated based on Equation 3.

[Equation 3]

$$\hat{T} = \frac{1}{2} \left( T_{round1} - T_{reply1} \right)$$

$$\hat{T} = \frac{1}{2} \left( T_{round2} - T_{reply2} \right)$$

And, $T_{round1}*T_{round2}-T_{reply1}*T_{reply2}$ may be obtained based on Equation 4.

[Equation 4]

$$T_{round1} \times T_{round2} - T_{reply1} \times T_{reply2}$$

$$= 4\hat{T}^2 + 2\hat{T}\left(T_{reply1} + T_{reply2}\right) = \hat{T}\left(T_{round1} + T_{round2} + T_{reply1} + T_{reply2}\right)$$

Where

$$T_{round1} \times T_{round2} = \left(2\hat{T} + T_{reply1}\right)\left(2\hat{T} + T_{reply2}\right)$$

$$= 4\hat{T}^2 + 2\hat{T}\left(T_{reply1} + T_{reply2}\right) + T_{reply1} \times T_{reply2}$$

Accordingly, the propagation delay T may be estimated as Equation 5.

[Equation 5]

$$\hat{T} = \frac{T_{round1} \times T_{round2} - T_{reply1} \times T_{reply2}}{\left(T_{round1} + T_{round2} + T_{reply1} + T_{reply2}\right)}$$

In this case, the propagation delay estimation error due to clock error can be obtained based on Equation 6.

[Equation 6]

$$error = \hat{T} - T \approx \frac{\left(e_{UE1} + e_{UE2}\right)}{2}\hat{T}$$

where

$e_{UE1}$ and $e_{UE2}$ is the clock offset of UE1 and UE 2;
$\hat{T}$ is estimated propagation delay between UE 1 and UE 2.

Table 6 shows an example of reference signal time difference (RSTD). The RSTD in Table 6 may be applied for SL positioning.

[Table 6]

| Definition | The relative timing difference between the E-UTRA neighbour cell j and the E-UTRA reference cell i, defined as $T_{SubframeRxj}$ - $T_{SubframeRxi}$, where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
|---|---|
| Applicable for | RRC CONNECTED inter-RAT |

Table 7 shows an example of downlink PRS reference signal received power (DL PRS RSRP). The DL PRS RSRP in Table 7 may be applied for SL positioning.

[Table 7]

| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
|---|---|
| Applicable for | RRC _CONNECTED intra-frequency, |

(continued)

| | RRC _CONNECTED inter-frequency |
|---|---|

Table 8 shows an example of downlink reference signal time difference (DL RSTD). The DL RSTD in Table 8 may be applied for SL positioning.

[Table 8]

| Definition | DL reference signal time difference (DL RSTD) the positioning node $j$ and the reference positioning node $i$, is defined as $T_{subframeRxj}$ - $T_{SubframeRxi}$, Where: $T_{SubframeRxj}$ is the time when the UE receives the start of one subframe from positioning node $j$. $T_{SubframeRxi}$ is the time when the UE receives the corresponding start of one subframe from positioning node i that is closest in time to the subframe received from positioning node $j$. Multiple DL PRS resources can be used to determine the start of one subframe from a positioning node. For frequency range 1, the reference point for the DL RSTD shall be the antenna connector of the UE. For frequency range 2, the reference point for the DL RSTD shall be the antenna of the UE. |
|---|---|
| Applicable for | RRC _CONNECTED intra-frequency, RRC _CONNECTED inter-frequency |

Table 9 shows an example of UE Rx-Tx time difference. The UE Rx-Tx time difference in Table 9 may be applied for SL positioning.

[Table 9]

| Definition | The UE Rx - Tx time difference is defined as $T_{UE-RX}$ - $T_{UE-TX}$ Where: $T_{UE-RX}$ is the UE received timing of downlink subframe #$i$ from a positioning node, defined by the first detected path in time. $T_{UE-TX}$ is the UE transmit timing of uplink subframe #$j$ that is closest in time to the subframe #i received from the positioning node. Multiple DL PRS resources can be used to determine the start of one subframe of the first arrival path of the positioning node. For frequency range 1, the reference point for $T_{UE-RX}$ measurement shall be the Rx antenna connector of the UE and the reference point for $T_{UE-TX}$ measurement shall be the Tx antenna connector of the UE. For frequency range 2, the reference point for $T_{UE-RX}$ measurement shall be the Rx antenna of the UE and the reference point for $T_{UE-TX}$ measurement shall be the Tx antenna of the UE. |
|---|---|
| Applicable for | RRC _CONNECTED intra-frequency, RRC _CONNECTED inter-frequency |

Table 10 shows an example of uplink relative time of arrival (UL RTOA) ($T_{UL-RTOA}$). The UL RTOA in Table 10 may be applied for SL positioning.

[Table 10]

| Definition | [The UL Relative Time of Arrival ($T_{UL-RTOA}$) is the beginning of subframe i containing SRS received in positioning node $j$, relative to the configurable reference time.] Multiple SRS resources for positioning can be used to determine the beginning of one subframe containing SRS received a positioning node. The reference point for $T_{UL-RTOA}$ shall be: - for type 1-C base station: the Rx antenna connector, - for type 1-O or 2-O base station: the Rx antenna, |
|---|---|

(continued)

| | - for type 1-H base station: the Rx Transceiver Array Boundary connector. |
|---|---|

Table 11 shows an example of gNB Rx-Tx time difference. The gNB Rx-Tx time difference in Table 11 may be applied for SL positioning.

[Table 11]

| Definition | The gNB Rx - Tx time difference is defined as $T_{gNB-RX} - T_{gNB-TX}$ <br> Where: <br> $T_{gNB-RX}$ is the positioning node received timing of uplink subframe #*i* containing SRS associated with UE, defined by the first detected path in time. <br> $T_{gNB-TX}$ is the positioning node transmit timing of downlink subframe #*j* that is closest in time to the subframe #*i* received from the UE. <br> Multiple SRS resources for positioning can be used to determine the start of one subframe containing SRS. <br> The reference point for $T_{gNB-RX}$ shall be: <br>  - for type 1-C base station: the Rx antenna connector, <br>  - for type 1-O or 2-O base station: the Rx antenna, <br>  - for type 1-H base station: the Rx Transceiver Array Boundary connector. <br> The reference point for $T_{gNB-TX}$ shall be: <br>  - for type 1-C base station: the Tx antenna connector, <br>  - for type 1-O or 2-O base station: the Tx antenna, <br>  - for type 1-H base station: the Tx Transceiver Array Boundary connector. |
|---|---|

Table 12 shows an example of UL angle of arrival (UL AoA). The UL AoA in Table 12 may be applied for SL positioning.

[Table 12]

| Definition | UL Angle of Arrival (UL AoA) is defined as the estimated azimuth angle and vertical angle of a UE with respect to a reference direction, wherein the reference direction is defined: <br>  - In the global coordinate system (GCS), wherein estimated azimuth angle is measured relative to geographical North and is positive in a counter-clockwise direction and estimated vertical angle is measured relative to zenith and positive to horizontal direction <br>  - In the local coordinate system (LCS), wherein estimated azimuth angle is measured relative to x-axis of LCS and positive in a counter-clockwise direction and estimated vertical angle is measured relative to z-axis of LCS and positive to x-y plane direction. <br> The UL-AoA is determined at the gNB antenna for an UL channel corresponding to this UE. |
|---|---|

Table 13 shows an example of UL SRS reference signal received power (UL SRS RSRP). The UL SRS RSRP in Table 13 may be applied for SL positioning.

[Table 13]

| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. <br> For frequency range 1 and 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |
|---|---|

Meanwhile, in conventional base station-to-UE link (e.g., Uu link)-based positioning, resources having the same PRS resource ID may be combined at a receiving side. However, in inter-UE positioning (e.g., SL positioning), when a resource position and an inter-UE reference signal resource (e.g., SL PRS resource) ID have a one-to-one correspondence, inter-UE reference signal resources (e.g., SL PRS resources) to be combined may have different inter-UE reference signal resource (e.g., SL PRS resource) IDs, and thus a combining operation may not be performed.

In the present disclosure, an efficient method is proposed that solves the above-described problem and enables inter-UE reference signal resources (e.g., SL PRS resources) that are targets of combining (or inter-UE reference signal (e.g., SL PRS) transmissions based on the corresponding resources) to be combined at a receiving side.

Hereinafter, combining for inter-UE reference signal resources (e.g., SL PRS resources) may be replaced with combining for inter-UE reference signals (e.g., SL PRSs) transmitted based on the corresponding resources.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives an inter-UE physical control channel (e.g., PSCCH) (and/or inter-UE physical shared channel (e.g., PSSCH)) (re) transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) inter-UE physical shared channel (e.g., PSSCH) (and/or (NR or LTE) inter-UE physical control channel (e.g., PSCCH)) (and/or (NR or LTE) SL SSB (and/or UL channel/signal))". And, the methods proposed in the present disclosure may be used in combination with each other (in a new type of manner).

For example, the term "specific threshold" below may refer to a threshold value defined in advance or (pre-) configured by a higher layer (including an application layer) of a network, a base station, or a UE. Hereinafter, the term "specific configuration value" may refer to a value defined in advance or (pre-)configured by a higher layer (including an application layer) of a network, a base station, or a UE. Hereinafter, "configured by a network/base station" may mean an operation in which a base station configures (in advance) a UE by higher layer RRC signaling, configures/signals a UE through MAC CE, or signals a UE through DCI.

In the following disclosure, the following terms are used.

LMF - location management function

UE-triggered inter-UE positioning (e.g., sidelink (SL) positioning) - inter-UE positioning (e.g., SL positioning) where the procedure is triggered by UE

gNB/LMF-triggered inter-UE positioning (e.g., SL positioning) - inter-UE positioning (e.g., SL positioning) where the procedure is triggered by gNB/LMF

UE-controlled inter-UE positioning (e.g., SL positioning) - inter-UE positioning (e.g., SL positioning) where the inter-UE positioning (e.g., SL positioning) group is created by UE

gNB-controlled inter-UE positioning (e.g., SL positioning) -inter-UE positioning (e.g., SL positioning) where the inter-UE positioning (e.g., SL positioning) group is created by gNB

UE-based inter-UE positioning (e.g., SL positioning) -inter-UE positioning (e.g., SL positioning) where the UE position is calculated by UE

UE-assisted inter-UE positioning (e.g., SL positioning) - inter-UE positioning (e.g., SL positioning) where the UE position is calculated by gNB/LMF

inter-UE positioning (e.g., SL positioning) group - UEs that participates in inter-UE positioning (e.g., SL positioning)

Target UE (T-UE) - UE whose position is calculated

Server UE (S-UE) - UE that assists T-UE's positioning

Anchor UE - UE that assists T-UE's positioning

MG - measurement gap where only a reference signal (e.g., SL PRS) transmission is allowed

MW - measurement window where both SL data and reference signal (e.g., SL PRS) can be transmitted in a multiplexed way

SL PRS - sidelink positioning reference signal

CCH - control channel

IUC message - inter-UE coordination message. It is a message that a transmitting UE receives from another UE, including a receiving UE, and it may mean a message that includes information for a preferred resource set that is suitable for a transmitting UE to transmit to a receiving UE and/or a non-preferred resource set that is not suitable for the transmitting UE to transmit.

JCAS - Joint Communication and Sensing

RIS - Reconfigurable Intelligent Surface

According to an embodiment of the present disclosure, an inter-UE reference signal (e.g., SL PRS) transmission resource may be composed of an inter-UE reference signal resource (e.g., SL PRS resource) set composed of the following information. Or, for example, information related to inter-UE reference signal (e.g., SL PRS) transmission resources may include some or all of the following information.

1. inter-UE reference signal resource (e.g., SL PRS resource) set ID

2. inter-UE reference signal resource (e.g., SL PRS resource) ID list: an inter-UE reference signal resource (e.g., SL PRS resource) ID list in an inter-UE reference signal resource (e.g., SL PRS resource) set

3. inter-UE reference signal resource (e.g., SL PRS resource) type: it can be configured as periodic, aperiodic, semi-persistent, or on-demand.

4. Alpha value for inter-UE reference signal (e.g., SL PRS) power control

5. P0 value for inter-UE reference signal (e.g., SL PRS) power control

6. Pathloss reference for inter-UE reference signal (e.g., SL PRS) power control: it can be configured as SL synchronization signal block (SSB), downlink (DL) PRS, uplink (UL) sounding reference signal (SRS), SL SRS for positioning, inter-UE physical control channel demodulation reference signal (e.g., PSCCH DMRS), inter-UE physical shared channel demodulation reference signal (e.g., PSSCH DMRS), PSFCH, or SL CSI RS etc.

According to an embodiment of the present disclosure, an inter-UE reference signal resource (e.g., SL PRS resource) set may be composed of an inter-UE reference signal resource (e.g., SL PRS resource) composed of the following information. Or, for example, information related to the inter-UE reference signal (e.g., SL PRS) transmission resource may include some or all of the following information.

1. inter-UE reference signal resource (e.g., SL PRS resource) ID

2. inter-UE reference signal (e.g., SL PRS) comb size: an interval between REs at which an inter-UE reference signal (e.g., SL PRS) is transmitted within a symbol.

3. inter-UE reference signal (e.g., SL PRS) comb offset: an index of a RE at which an inter-UE reference signal (e.g., SL PRS) is initially transmitted within the first inter-UE reference signal (e.g., SL PRS) symbol.

4. inter-UE reference signal (e.g., SL PRS) comb cyclic shift: cyclic shift used to generate the sequence constituting the inter-UE reference signal (e.g., SL PRS).

5. inter-UE reference signal (e.g., SL PRS) start position: an index of the first symbol in which inter-UE reference signal (e.g., SL PRS) is transmitted within one slot.

6. inter-UE reference signal (e.g., SL PRS) #symbol: the number of symbols constituting inter-UE reference signal (e.g., SL PRS) within one slot

7. Frequency domain shift: position (of an index) of the lowest frequency at which inter-UE reference signal (e.g., SL PRS) is transmitted in the frequency domain

8. inter-UE reference signal (e.g., SL PRS) BW: Frequency Bandwidth Used for inter-UE reference signal (e.g., SL PRS) Transmission

9. inter-UE reference signal resource (e.g., SL PRS resource) type: it can be configured as periodic, aperiodic, semi-persistent, or on-demand.

10. inter-UE reference signal (e.g., SL PRS) periodicity: it is a period in the time domain between inter-UE reference signal resource (e.g., SL PRS resource)s, and has a physical or logical slot unit of a resource pool in which the inter-UE reference signal (e.g., SL PRS) is transmitted.

11. inter-UE reference signal (e.g., SL PRS) offset: Reference timing Reference, an offset in the time domain to the start of the first inter-UE reference signal resource (e.g., SL PRS resource), and it has units of physical or logical slots of resource pools in which inter-UE reference signals (e.g., SL PRSs) are transmitted. For example, the reference timing may be SFN = 0, DFN = 0, or a successful reception or decoding time of RRC/MAC CE/DCI/SCI related to the inter-UE reference signal resource (e.g., SL PRS resource).

12. inter-UE reference signal (e.g., SL PRS) sequence ID

13. inter-UE reference signal (e.g., SL PRS) spatial relation: It can be configured to SL SSB, DL PRS, UL SRS, UL SRS for positioning, inter-UE physical control channel demodulation reference signal (e.g., PSCCH DMRS), inter-UE physical shared channel demodulation reference signal (e.g., PSSCH DMRS), PSFCH, or SL CSI RS.

14. inter-UE reference signal (e.g., SL PRS) CCH: inter-UE reference signal (e.g., SL PRS) control channel. For example, inter-UE reference signal resource (e.g., SL PRS resource) configuration information and resource location may be signaled through the inter-UE reference signal (e.g., SL PRS) CCH.

According to an embodiment of the present disclosure, for inter-UE positioning (e.g., SL positioning), a UE may operate in a transmission mode in which the UE autonomously selects an inter-UE reference signal (e.g., SL PRS) transmission resource based on sensing or randomly. In this case, when one or more inter-UE reference signals (e.g., SL PRSs) are transmitted for the purpose of allowing combining at a receiving side in order to improve reception performance of the inter-UE reference signal (e.g., SL PRS), the UE may select one or more inter-UE reference signal (e.g., SL PRS) transmission resources linked to the same source ID and/or destination (or target) ID transmitted through a linked inter-UE reference signal control channel (e.g., SL PRS CCH) by performing the following operations.

For example, after selecting a valid inter-UE reference signal (e.g., SL PRS) transmission resource within a resource selection window period based on sensing or random selection, the UE may, for inter-UE reference signal (e.g., SL PRS) transmission resources for which combining is allowed, transmit the same combining ID together through an inter-UE reference signal control channel (e.g., SL PRS CCH) linked to the inter-UE reference signal (e.g., SL PRS) transmission resources. In this case, at a receiving side, combining may be performed for inter-UE reference signal (e.g., SL PRS) transmission resources linked to the same combining ID by decoding the inter-UE reference signal control channel (e.g., SL PRS CCH).

For example, an inter-UE reference signal resource (e.g., SL PRS resource) ID having a one to one correspondence with a resource position of an inter-UE reference signal resource (e.g., SL PRS resource) may be transmitted through an inter-UE reference signal control channel (e.g., SL PRS CCH) linked to the inter-UE reference signal resource (e.g., SL PRS resource).

For example, in the above-described case, when a UE selects, based on sensing, N inter-UE reference signal resources (e.g., SL PRS resources) for which combining is to be allowed, the UE may select, within a resource selection window period, only candidate inter-UE reference signal resources (e.g., SL PRS resources) that occupy the same time and frequency positions within each corresponding slot including the N inter-UE reference signal resources (e.g., SL PRS resources), among resources for which a reference signal received power (e.g., RSRP) measurement value for each candidate resource linked to sensing is less than or equal to a reference signal received power (e.g., RSRP) threshold value.

For example, in the above-described case, within the resource selection window period, the UE may select, as candidate inter-UE reference signal resources (e.g., SL PRS resources), N inter-UE reference signal resources (e.g., SL PRS resources) for which reference signal received power (e.g., RSRP) measurement values linked to sensing of the N candidate inter-UE reference signal resources (e.g., SL PRS resources) are less than or equal to a reference signal received power (e.g., RSRP) threshold value.

Here, for example, the reference signal received power (e.g., RSRP) measurement value linked to sensing may be an average reference signal received power (e.g., RSRP) measurement value of the N inter-UE reference signal resources (e.g., SL PRS resources).

And/or, for example, the reference signal received power (e.g., RSRP) measurement value linked to sensing may be a maximum reference signal received power (e.g., RSRP) measurement value among reference signal received power (e.g., RSRP) measurement values of the N inter-UE reference signal resources (e.g., SL PRS resources).

For example, in the above-described case, when the number of valid inter-UE reference signal resources (e.g., SL PRS resources) selected based on sensing within the resource selection window period is less than a threshold value, the reference signal received power (e.g., RSRP) threshold value linked to sensing may be incremented by a certain threshold value, and then the resource selection procedure may be performed (again).

For example, in the above-described case, for an arbitrary inter-UE reference signal resource (e.g., SL PRS resource) selected by a UE, the inter-UE reference signal resource (e.g., SL PRS resource) may be reselected to another resource based on resource re-evaluation or pre-emption or etc. with respect to the inter-UE reference signal resource (e.g., SL PRS resource).

Here, for example, within a slot within the resource selection window period, the UE may reselect the inter-UE reference signal resource (e.g., SL PRS resource) to be reselected only from inter-UE reference signal resources (e.g., SL PRS resources) that occupy the same time and frequency positions as the corresponding resource. Alternatively, for example, the UE may reselect the inter-UE reference signal resource (e.g., SL PRS resource) to be reselected only from inter-UE reference signal resources (e.g., SL PRS resources) that occupy the same time and frequency positions as the corresponding resource on different slots within the resource selection window period.

And/or, for example, when an inter-UE reference signal resource (e.g., SL PRS resource) to be reselected does not exist within the resource selection window period (that is, when no resource having the same time and frequency positions as a resource before reselection exists within the resource selection window period), the reference signal received power (e.g., RSRP) threshold value linked to sensing may be incremented by a certain value, and then the reselection procedure may be performed (again).

For example, in the above-described case, when a UE transmits an inter-UE reference signal (e.g., SL PRS) based on beamforming, the UE may distinguish inter-UE reference signals (e.g., SL PRSs) based on different beams in the following manner.

Here, for example, for each inter-UE reference signal resource (e.g., SL PRS resource) occupying the same time and frequency resource position within one slot, a beam index used for transmission based on each inter-UE reference signal resource (e.g., SL PRS resource) may be transmitted through an inter-UE reference signal control channel (e.g., SL PRS CCH) linked to each inter-UE reference signal resource (e.g., SL PRS resource).

And/or, for example, a combining ID linked to each inter-UE reference signal resource (e.g., SL PRS resource) may be used as the beam index.

And/or, for example, inter-UE reference signal resource (e.g., SL PRS resource) transmission linked to different beam indices may be transmission linked to different destination IDs. That is, inter-UE reference signal control channels (e.g., SL PRS CCHs) linked to the inter-UE reference signal resources (e.g., SL PRS resources) may indicate different destination IDs.

And/or, for example, inter-UE reference signal resource (e.g., SL PRS resource) transmission linked to different beam indices may be transmission linked to the same destination ID. For example, in the above-described case, inter-UE reference signal resources (e.g., SL PRS resources) having different beam indices may be combined at a receiving side, thereby improving reception performance of an inter-UE reference signal (e.g., SL PRS). For example, the above operation may be limited to an operation performed before beam pairing between a transmitting UE and a receiving UE is completed.

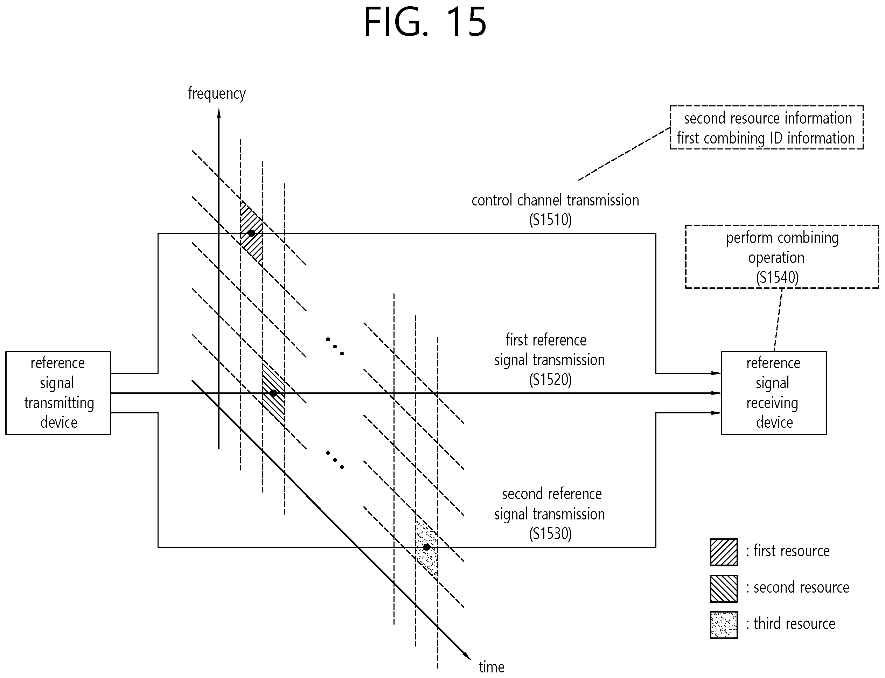

FIG. 15 shows a procedure in which a device that receives an inter-device reference signal performs a combining operation, according to an embodiment of the present disclosure. The embodiment of FIG. 15 may be combined with various embodiments of the present disclosure.

Referring to FIG. 15, a reference signal transmitting device that performs transmission to a reference signal receiving device through time/frequency resources is shown. Here, for example, a time unit of a first resource and a time unit of a second resource may be different, a time unit of the first resource and a time unit of a third resource may be different, and a time unit of the second resource and a time unit of the third resource may be the same. And/or, for example, a resource pool including the first resource may be different from a resource pool including the second resource and the third resource. For example, herein, a transmitted reference signal may be an inter-device reference signal or an inter-UE reference signal (e.g., SL PRS).

In step S1510, the reference signal transmitting device may perform control channel transmission to the reference signal receiving device based on the first resource. For example, the control channel transmission may be inter-UE reference signal control channel (e.g., SL PRS CCH) transmission described in the present disclosure. For example, through the control channel transmission, information for the second resource and first combining ID information related to the second resource may be indicated to the reference signal receiving device.

In step S1520, the reference signal transmitting device may perform first reference signal transmission to the reference signal receiving device through the second resource.

In step S1530, the reference signal transmitting device may perform second reference signal transmission to the reference signal receiving device through the third resource. Here, time and frequency positions occupied by the third resource within a slot including the third resource may be the same as time and frequency positions occupied by the second resource within a slot including the second resource. According to various embodiments of the present disclosure, a combining ID related to the third resource may be the same first combining ID as the first combining ID related to the second resource.

In step S1540, the reference signal receiving device may perform a combining operation for the first reference signal and the second reference signal (or for a plurality of reference signals including the first reference signal and the second reference signal and related to the same combining ID), based on combining IDs related to the second resource and the third resource being the same.

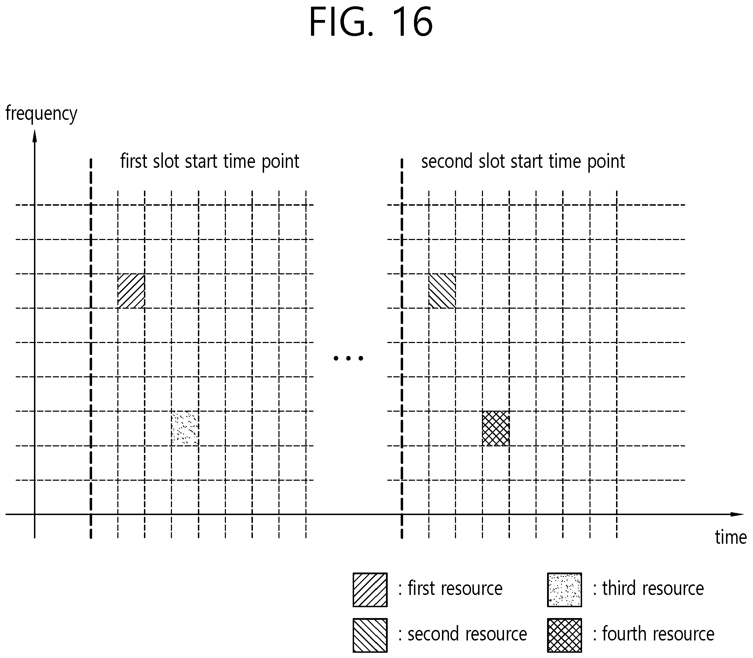

FIG. 16 shows resources related to the same combining ID within different slots, according to an embodiment of the present disclosure. The embodiment of FIG. 16 may be combined with various embodiments of the present disclosure.

Referring to FIG. 16, a plane formed by a time axis and a frequency axis is shown. Here, a first resource and a second resource may be resources that occupy the same time and frequency positions within a first slot and a second slot, respectively. Also, a third resource and a fourth resource may be resources that occupy the same time and frequency positions within the first slot and the second slot, respectively.

Here, for example, since the first resource and the second resource occupy the same time and frequency positions within a slot, the first resource and the second resource may be related to a first combining ID. That is, the first combining ID information may be indicated through control channel transmission indicating the first resource, and the same first combining ID information may be indicated through control channel transmission indicating the second resource.

Similarly, for example, since the third resource and the fourth resource occupy the same time and frequency positions within a slot, the third resource and the fourth resource may be related to a second combining ID. That is, the second combining ID information may be indicated through control channel transmission indicating the third resource, and the same second combining ID information may be indicated through control channel transmission indicating the fourth resource.

According to various embodiments of the present disclosure, an efficient method, when a UE performs inter-UE positioning (e.g., SL positioning) using one or more antenna panels, is proposed in which the UE reports antenna information used to transmit and/or receive an inter-UE reference signal (e.g., SL PRS) through a measurement report, thereby enabling positioning to be performed without degrading positioning accuracy.

Meanwhile, when inter-UE reference signal resources (e.g., SL PRS resources) transmitted by different UEs within one slot are time-division multiplexed (e.g., TDMed), there may be a need to define a method for efficiently indicating each of the time-division-multiplexed inter-UE reference signal resources (e.g., SL PRS resources).

In the present disclosure, a method, when inter-UE reference signal resources (e.g., SL PRS resources) transmitted by different UEs within one slot are time-division multiplexed (e.g., TDMed), for efficiently indicating each of the time-division-multiplexed inter-UE reference signal resources (e.g., SL PRS resources) based on a time-division multiplexing index (e.g., TDM index) and a resource element offset (e.g., RE offset) is proposed.

When configuration information of one or more inter-UE reference signals (e.g., SL PRSs) allowed to be transmitted in a resource pool is (pre-)configured, and inter-UE reference signal resources (e.g., SL PRS resources) by different UEs within one slot are multiplexed based on time-division multiplexing (e.g., TDM) and/or comb-based multiplexing, the UE may indicate each of the multiplexed inter-UE reference signal resources (e.g., SL PRS resources) in the following manner.

In the above-described case, within a resource pool, each time-division multiplexing (e.g., TDM) interval within one slot may be (pre-)configured as follows.

For example, a time-division multiplexing index (e.g., TDM index) for each time-division multiplexing (e.g., TDM) interval may be configured, and a start position (e.g., a start symbol index) for each time-division multiplexing (e.g., TDM) interval and a time-division multiplexing (e.g., TDM) interval length (e.g., a number of symbols within the time-division multiplexing (e.g., TDM) interval) may be (pre-)configured.

For example, according to a length of time-division multiplexing (e.g., TDM) intervals configured in the resource pool, a time-division multiplexing index (e.g., TDM index) may be determined (or designated or configured) in an order of shorter-length time-division multiplexing (e.g., TDM) intervals or in an order of longer-length time-division multiplexing (e.g., TDM) intervals.

For example, when lengths of time-division multiplexing (e.g., TDM) intervals configured in the resource pool are all the same, a time-division multiplexing index (e.g., TDM index) may be determined (or designated or configured), based on inter-UE reference signal (e.g., SL PRS) configuration information allowed per time-division multiplexing (e.g., TDM) interval, in an order of time-division multiplexing indices having larger comb sizes or in an order of time-division multiplexing indices having smaller comb sizes. Alternatively, for example, when comb sizes of inter-UE reference signals (e.g., SL PRSs) allowed per time-division multiplexing (e.g., TDM) interval are all the same, a time-division multiplexing (e.g., TDM) interval that is earliest in time may be determined (or designated or configured) to have a smallest time-division multiplexing index (e.g., TDM index).

According to an embodiment of the present disclosure, a time-division multiplexing configuration (e.g., TDM configuration) allowed within one slot and (pre-)configured in a resource pool may include the following information.

- a time-division multiplexing index (e.g., TDM index)
- the number of symbols within time-division multiplexing (e.g., TDM)
- the comb size of an inter-UE reference signal (e.g., SL PRS) that can be transmitted within time-division multiplexing (e.g., TDM)
- selectively:

    -- a start symbol index of time-division multiplexing (e.g., TDM)
    -- an allowed resource element offset (e.g., RE offset) gap (a resource element offset (e.g., RE offset) gap between inter-UE reference signal resources (e.g., SL PRS resources) adjacent in a frequency domain)

In the above-described case, an inter-UE reference signal resource (e.g., SL PRS resource) ID that can be multiplexed within each time-division multiplexing (e.g., TDM) interval may be determined (or designated or configured) as follows.

For example, a comb resource element offset (e.g., RE offset) may be counted first and reflected in an inter-UE reference signal resource (e.g., SL PRS resource) ID, and a time-division multiplexing index (e.g., TDM index) may be counted later and reflected in the inter-UE reference signal resource (e.g., SL PRS resource) ID. By doing so, inter-UE reference signal resources (e.g., SL PRS resources) that are comb-based multiplexed within one time-division multiplexing (e.g., TDM) interval may be determined (or designated or configured) to have inter-UE reference signal resource (e.g., SL PRS resource) IDs adjacent to each other.

For example, when two time-division multiplexing (e.g., TDM) intervals are configured within one slot, a comb pattern #1 (the number of symbols M, a comb size N) = (4, 4) is configured in a first time-division multiplexing (e.g., TDM) interval (a time-division multiplexing index (e.g., TDM index) = 0), and a comb pattern #2 (the number of symbols M, a comb size N) = (2, 2) is configured in a second time-division multiplexing (e.g., TDM) interval (a time-division multiplexing index (e.g., TDM index) = 1), an inter-UE reference signal resource (e.g., SL PRS resource) ID may be determined (or designated or configured) as follows.

Inter-UE reference signal resource (e.g., SL PRS resource) ID = 0: an inter-UE reference signal resource (e.g., SL PRS resource) having a comb resource element offset (e.g., RE offset) = 0 within a time-division multiplexing index (e.g., TDM index) = 0.

Inter-UE reference signal resource (e.g., SL PRS resource) ID = 1: an inter-UE reference signal resource (e.g., SL PRS resource) having a comb resource element offset (e.g., RE offset) = 1 within a time-division multiplexing index (e.g., TDM index) = 0.

Inter-UE reference signal resource (e.g., SL PRS resource) ID = 2: an inter-UE reference signal resource (e.g., SL PRS resource) having a comb resource element offset (e.g., RE offset) = 2 within a time-division multiplexing index (e.g., TDM index) = 0.

Inter-UE reference signal resource (e.g., SL PRS resource) ID = 3: an inter-UE reference signal resource (e.g., SL PRS resource) having a comb resource element offset (e.g., RE offset) = 3 within a time-division multiplexing index (e.g., TDM index) = 0.

Inter-UE reference signal resource (e.g., SL PRS resource) ID = 4: an inter-UE reference signal resource (e.g., SL PRS resource) having a comb resource element offset (e.g., RE offset) = 0 within a time-division multiplexing index (e.g., TDM index) = 1.

Inter-UE reference signal resource (e.g., SL PRS resource) ID = 5: an inter-UE reference signal resource (e.g., SL PRS resource) having a comb resource element offset (e.g., RE offset) = 1 within a time-division multiplexing index (e.g., TDM index) = 1.

An expression of the above-described inter-UE reference signal resource (e.g., SL PRS resource) ID rule in a formula is shown in Equation 7 below.

[Equation 7]

$$SL\ PRS\ resource\ ID\ (i, j) = j + \sum_{k=0}^{i} comb\ size\ (k-1)$$

In this case, an SL PRS resource ID $(i, j)$ is an ID of an inter-UE reference signal resource (e.g., SL PRS resource) having a comb resource element offset (e.g., RE offset) = $j$ in a time-division multiplexing index (e.g., TDM index) = $i$ interval, a comb size $(k)$ is a comb size of an inter-UE reference signal (e.g., SL PRS) allowed in a time-division multiplexing index (e.g., TDM index) = $k$ interval, and a comb size $(-1)$ may be defined as 0.

According to an embodiment of the present disclosure, when a maximum comb size (pre-)configured in a resource pool is Nmax, and a maximum number of possible symbols that can be used for inter-UE reference signal (e.g., SL PRS) transmission within one slot is Mmax, an inter-UE reference signal resource (e.g., SL PRS resource) ID may be generalized and defined as follows.

Inter-UE reference signal resource (e.g., SL PRS resource) ID = (a symbol index) * Nmax + a comb resource element offset (e.g., RE offset).

In this case, a symbol index may be defined as {0, 1, ..., Mmax-1}, and a comb resource element offset (e.g., RE offset) may be defined as {0, 1, ..., Nmax-1}.

According to various embodiments of the present disclosure, a method, when inter-UE reference signal resources (e.g., SL PRS resources) transmitted by different UEs within one slot are time-division multiplexed (e.g., TDMed), in which each of the time-division-multiplexed inter-UE reference signal resources (e.g., SL PRS resources) is indicated based on a time-division multiplexing index (e.g., TDM index) and a resource element offset (e.g., RE offset), thereby reducing signaling overhead as compared to a method of indicating based on a symbol index and a resource element offset (e.g., RE offset) and enabling efficient indication is proposed.

Meanwhile, when inter-UE reference signal resources (e.g., SL PRS resources) transmitted by different UEs within one slot are time-division multiplexed (e.g., TDMed), unused and wasted symbols may occur within the slot according to an inter-UE reference signal (e.g., SL PRS) configuration configured in a resource pool.

In the present disclosure, a method, when inter-UE reference signal resources (e.g., SL PRS resources) transmitted by different UEs within one slot are time-division multiplexed (e.g., TDMed), for allocating symbols that may otherwise be wasted within the slot so that the symbols can be efficiently utilized may be proposed.

For example, when inter-UE reference signal resources (e.g., SL PRS resources) transmitted by different UEs within one slot are time-division multiplexed (e.g., TDMed), there may exist symbols that remain unused after applying the time-division multiplexing (e.g., TDM) within the slot.

Here, for example, when inter-UE reference signal (e.g., SL PRS) configuration information having fully staggered comb sizes = {1, 4} is configured in a resource pool, the number of symbols in one slot is 14, the number of symbols for inter-UE reference signal (e.g., SL PRS) transmission having comb sizes = 1 and 4 is 3 and 6, respectively (including automatic gain control symbols (e.g., AGC symbols) and transmission/reception switching gap symbols), and the number of symbols required for inter-UE reference signal control channel (e.g., SL PRS CCH) transmission is 4 ((the number of inter-UE reference signal control channel (e.g., SL PRS CCH) symbols = 2, including automatic gain control symbols (e.g., AGC symbols) and transmission/reception switching gap symbols)), when the inter-UE reference signals (e.g., SL PRSs) having the two comb sizes above are time-division multiplexed (e.g., TDMed) within one slot, the total number of symbols used for inter-UE reference signal control channel (e.g., SL PRS CCH) transmission and the two types of inter-UE reference signal (e.g., SL PRS) transmission becomes 13, and thus one symbol may remain unused within the slot.

As described above, when, based on inter-UE reference signal (e.g., SL PRS) configuration information and a time-division multiplexing (e.g., TDM) configuration configured in a resource pool, a sum of a total number of symbols required for inter-UE reference signal (e.g., SL PRS) transmission and inter-UE reference signal control channel (e.g., SL PRS CCH) transmission linked to the inter-UE reference signal (e.g., SL PRS) is smaller than the number of total symbols within one slot, and when a difference between the number of total symbols within the one slot and the sum of the total number of symbols is smaller than the number of symbols required for transmission of an inter-UE reference signal (e.g., SL PRS) having a smallest number of symbols configured in the resource pool, the UE may use remaining symbols left after time-division multiplexing (e.g., TDM) within the one slot as follows.

For example, all inter-UE reference signals (e.g., SL PRSs) that are time-division multiplexed (e.g., TDMed) and inter-UE reference signal control channels (e.g., SL PRS CCHs) linked thereto, within the resource pool, may be transmitted during a contiguous time interval within one slot, without allowing gaps caused by unused symbols between the inter-UE reference signals (e.g., SL PRSs) and between the inter-UE reference signals (e.g., SL PRSs) and the inter-UE reference signal control channels (e.g., SL PRS CCHs).

For example, in the above-described case, the contiguous time interval may start from the first symbol of one slot.

Here, for example, the above operation may be limited to be performed only when a feedback channel for the inter-UE reference signal (e.g., SL PRS) is transmitted at an end portion of the slot.

And/or, for example, retransmission for the inter-UE reference signal (e.g., SL PRS) may be requested through the feedback channel.

For example, in the above-described case, the contiguous time interval may end at the last symbol of one slot.

Here, for example, at a beginning portion of a slot to which the remaining symbols are added, the first automatic gain control symbol (e.g., AGC symbol) of the slot may be repeatedly transmitted.

For example, in the above-described case, a start symbol index of the contiguous time interval may be (pre-)configured in the resource pool.

For example, in the above-described case, remaining symbols outside the contiguous time interval within one slot may be left as a period in which no signal is transmitted, for the purpose of minimizing additional transmit power consumption of the UE.

Here, for example, the above-described operation may be limited to a case in which the remaining symbols are added to the last portion of the slot.

For example, within one slot, remaining symbols other than symbols required for transmission of an inter-UE reference signal control channel (e.g., SL PRS CCH) and inter-UE reference signals (e.g., SL PRSs) that are time-division multiplexed (e.g., TDMed) according to inter-UE reference signal (e.g., SL PRS) configuration information configured in the resource pool may be evenly distributed to and added to each of the inter-UE reference signals (e.g., SL PRSs) that are time-division multiplexed (e.g., TDMed).

For example, in the above-described case, the distributed symbols may be added after each of the time-division-multiplexed (e.g., TDMed) inter-UE reference signals (e.g., SL PRSs).

Here, for example, the added symbol interval may be left as a period in which no signal is transmitted, for the purpose of minimizing additional transmit power consumption of the UE.

And/or, for example, in a symbol interval added after each inter-UE reference signal (e.g., SL PRS), some symbol(s) of each inter-UE reference signal resource (e.g., SL PRS resource) may be copied and repeatedly transmitted.

Here, for example, in a symbol interval added after each inter-UE reference signal (e.g., SL PRS), the first symbol of each inter-UE reference signal (e.g., SL PRS) may be copied and transmitted. For example, this may be an operation for a purpose of phase tracking.

And/or, for example, in a symbol interval added after each inter-UE reference signal (e.g., SL PRS), the last symbol of each inter-UE reference signal (e.g., SL PRS) may be copied and transmitted. For example, this may be an operation for a purpose of phase tracking and frequency offset compensation.

And/or, for example, in a symbol interval added after each inter-UE reference signal (e.g., SL PRS), when the inter-UE reference signal (e.g., SL PRS) has a partially staggered comb pattern rather than a fully staggered comb pattern, a symbol for extending a comb pattern so that the comb pattern of the inter-UE reference signal (e.g., SL PRS) becomes a fully staggered comb pattern may be transmitted in the added symbol interval. That is, for example, when an inter-UE reference signal (e.g., SL PRS) having a comb size = 4 and the number of inter-UE reference signal symbols (e.g., SL PRS symbols) = 2 is time-division multiplexed (e.g., TDM) and two symbols are added, an inter-UE reference signal symbol (e.g., SL PRS symbol) having a resource element offset (e.g., RE offset) required for the added symbol interval may be transmitted so that, finally, a fully staggered comb pattern having a comb size = 4 and the number of inter-UE reference signal symbols (e.g., SL PRS symbols) = 4 is obtained.

For example, a fully staggered comb pattern may refer to a case in which all possible resource element offsets (e.g., RE offsets) according to a comb size within the inter-UE reference signal resource (e.g., SL PRS resource) are used. For example, when a comb size = 4, a pattern in which the number of inter-UE reference signal symbols (e.g., SL PRS symbols) is 4 may be a fully staggered comb pattern.

For example, a partially staggered comb pattern may refer to a case in which not all possible resource element offsets (e.g., RE offsets) according to a comb size within the inter-UE reference signal resource (e.g., SL PRS resource) are used. For example, when a comb size = 4, a pattern in which the number of inter-UE reference signal symbols (e.g., SL PRS symbols) is 2 may be a partially staggered comb pattern.

For example, within one slot, remaining symbols other than symbols required for transmission of an inter-UE reference signal control channel (e.g., SL PRS CCH) and inter-UE reference signals (e.g., SL PRSs) that are time-division multiplexed (e.g., TDM) according to inter-UE reference signal (e.g., SL PRS) configuration information configured in the resource pool may be evenly distributed to and added to each inter-UE reference signal resource (e.g., SL PRS resource) among the time-division-multiplexed (e.g., TDM) inter-UE reference signals (e.g., SL PRSs) that has a partially staggered pattern.

For example, within one slot, remaining symbols other than symbols required for transmission of an inter-UE reference signal control channel (e.g., SL PRS CCH) and inter-UE reference signals (e.g., SL PRSs) that are time-division multiplexed (e.g., TDM) according to inter-UE reference signal (e.g., SL PRS) configuration information configured in the resource pool may be preferentially added to an inter-UE reference signal resource (e.g., SL PRS resource) having a lowest linked priority value among the time-division-multiplexed (e.g., TDM) inter-UE reference signal resources (e.g., SL PRS resources). For example, in the added symbol interval, some symbols among linked inter-UE reference signal symbols (e.g., SL PRS symbols) (e.g., the first symbol(s) of the inter-UE reference signal (e.g., SL PRS)) may be repeatedly transmitted, or, as described above, ep the pattern may be extended to become a fully staggered pattern.

According to various embodiments of the present disclosure, an efficient method, when a UE performs inter-UE positioning (e.g., SL positioning) using one or more antenna panels, in which the UE reports, through a measurement report, antenna information used to transmit and/or receive an inter-UE reference signal (e.g., SL PRS), thereby enabling positioning to be performed without degrading positioning accuracy is proposed.

According to the conventional art, a method for combining a plurality of inter-UE reference signals (e.g., SL PRSs) during performance of an inter-UE positioning operation has not been provided. Especially, there is a need to provide a method for combining a plurality of inter-UE reference signals (e.g., SL PRSs) at a receiving side.

According to various embodiments of the present disclosure, the same combining ID may be transmitted through control channels (e.g., CCHs) linked to inter-UE reference signal (e.g., SL PRS) resources that allow (inter-UE reference signal) combining at a receiving side.

According to various embodiments of the present disclosure, a one-to-one correspondence may exist between resources and IDs (e.g., a resource ID and a combining ID), and, in this case, N candidate resources having the same frequency resource (and/or time resource) within each slot may be selected (per ID).

And, for example, a method for determining reference signal received power (e.g., RSRP) linked to selection of the N candidate resources may be provided. For example, the method may be performed based on an average, a maximum value, etc. (of the reference signal received power (e.g., RSRP)).

According to various embodiments of the present disclosure, when the number of valid (candidate) inter-UE reference signal (e.g., SL PRS) resources at the same (time and/or frequency) position within each slot is smaller than a threshold number, a reference signal received power (e.g., RSRP) value may be incremented. Alternatively, in such a case, a reference signal received power (e.g., RSRP) threshold value related to determination of a candidate resource set may be incremented.

For example, when a reselection operation is performed, the reselection operation may be performed such that a resource after reselection becomes a resource at the same (time and/or frequency) position within a slot (as a remaining resource or a resource before reselection).

For example, when beamforming-based transmission is performed, a combining ID described in the present disclosure may be used as a beam index.

According to various embodiments of the present disclosure, a combining operation for a plurality of inter-UE reference signals (e.g., SL PRSs) may be performed at a receiving side by causing the same combining ID to be indicated (through a related control channel) for inter-UE reference signal (e.g., SL PRS) resources for which combining is allowed at the receiving side, or by causing inter-UE reference signal (e.g., SL PRS) resources composed of resources at the same (time and/or frequency) position within a slot to be selected.

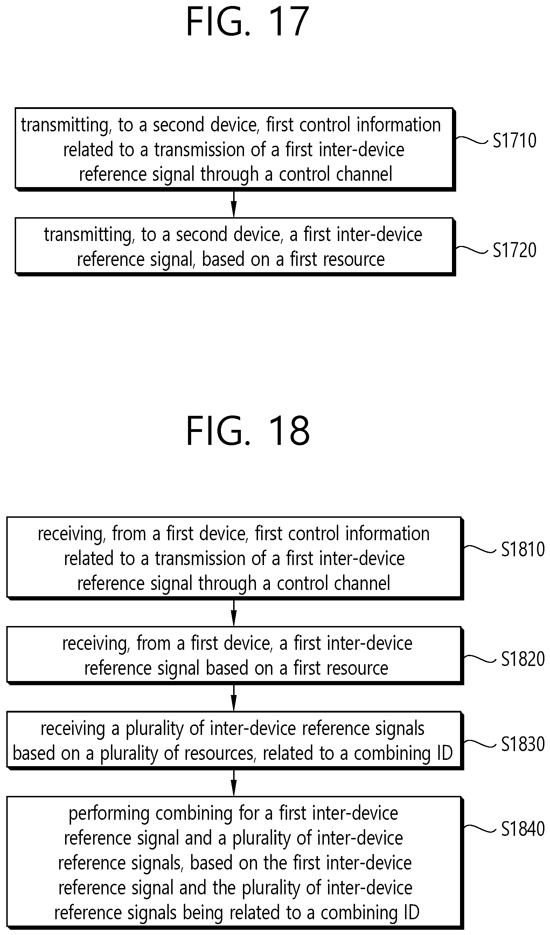

FIG. 17 shows a procedure in which a first device performs wireless communication, according to an embodiment of the present disclosure. The embodiment of FIG. 17 may be combined with various embodiments of the present disclosure.

Referring to FIG. 17, in step S1710, a first device may transmit, to a second device, first control information related to a transmission of a first inter-device reference signal through a control channel. For example, the first control information may include a combining identifier, ID, related to a first resource and information for the first resource. In step S1720, the first device may transmit, to the second device, the first inter-device reference signal, based on the first resource. For example, combining may be performed for a plurality of resources including the first resource, related to the combining ID.

For example, the first inter-device reference signal may be transmitted based on beamforming.

For example, the first control information may include a first beam index used for the transmission of the first inter-device reference signal.

For example, a first destination ID related to the first inter-device reference signal may be different from a second destination ID related to a transmission of a second inter-device reference signal, based on a second beam index related to the transmission of the second inter-device reference signal being different from the first beam index.

For example, the combining ID may be used as a beam index.

For example, beams used for transmissions of a plurality of inter-device reference signals performed based on the plurality of resources may be the same, based on the plurality of resources being related to the combining ID.

For example, the first control information may include a first destination ID related to the first inter-device reference signal, a second destination ID related to a second inter-device reference signal may be the same as the first destination ID, a first beam index used for the transmission of the first inter-device reference signal may be different from a second beam index used for the second inter-device reference signal, and the second inter-device reference signal may be received to the second device based on a second resource included in the plurality of resources.

For example, the combining may be performed before completion of beam pairing.

For example, the combining ID may be the same for resources at the same position within each of the slots related to the plurality of resources.

For example, the combining ID may be the same for resources at the same time and frequency position within each of the slots related to the plurality of resources.

For example, additionally, the first device may select the plurality of resources from among a candidate resource set based on the combining ID. For example, in the candidate resource set, only resources related to the combining ID and at the same position within each of the slots related to the plurality of resources may be included.

For example, additionally, the first device may increment a reference signal received power threshold value, based on a number of candidate resources related to the combining ID, whose related reference signal received power value is smaller than the reference signal received power threshold value, within a resource selection window being less than a threshold number.

For example, additionally, the first device may transmit, to the second device, a plurality of inter-device reference signals, based on the plurality of resources.

The embodiments described above may be applied to various devices described below. First, a processor 102 of a first device 100 may control a transceiver 106 to transmit, to a second device 200, first control information related to a transmission of a first inter-device reference signal through a control channel. For example, the first control information may include a combining identifier, ID, related to a first resource and information for the first resource. And, the processor 102 of the first device 100 may control the transceiver 106 to transmit, to the second device 200, the first inter-device reference signal, based on the first resource. For example, combining may be performed for a plurality of resources including the first resource, related to the combining ID.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: transmitting, to a second device, first control information related to a transmission of a first inter-device reference signal through a control channel, wherein the first control information may include a combining identifier, ID, related to a first resource and information for the first resource; and transmitting, to the second device, the first inter-device reference signal, based on the first resource, wherein combining may be performed for a plurality of resources including the first resource, related to the combining ID.

For example, the first inter-device reference signal may be transmitted based on beamforming.

For example, the first control information may include a first beam index used for the transmission of the first inter-device reference signal.

For example, a first destination ID related to the first inter-device reference signal may be different from a second destination ID related to a transmission of a second inter-device reference signal, based on a second beam index related to the transmission of the second inter-device reference signal being different from the first beam index.

For example, the combining ID may be used as a beam index.

For example, beams used for transmissions of a plurality of inter-device reference signals performed based on the plurality of resources may be the same, based on the plurality of resources being related to the combining ID.

For example, the first control information may include a first destination ID related to the first inter-device reference signal, a second destination ID related to a second inter-device reference signal may be the same as the first destination ID, a first beam index used for the transmission of the first inter-device reference signal may be different from a second beam index used for the second inter-device reference signal, and the second inter-device reference signal may be received to the second device based on a second resource included in the plurality of resources.

For example, the combining may be performed before completion of beam pairing.

For example, the combining ID may be the same for resources at the same position within each of the slots related to the plurality of resources.

For example, the combining ID may be the same for resources at the same time and frequency position within each of the slots related to the plurality of resources.

For example, additionally, the operations may further comprise: selecting the plurality of resources from among a candidate resource set based on the combining ID. For example, in the candidate resource set, only resources related to the combining ID and at the same position within each of the slots related to the plurality of resources may be included.

For example, additionally, the operations may further comprise: incrementing a reference signal received power threshold value, based on a number of candidate resources related to the combining ID, whose related reference signal received power value is smaller than the reference signal received power threshold value, within a resource selection window being less than a threshold number.

For example, additionally, the operations may further comprise: transmitting, to the second device, a plurality of inter-device reference signals, based on the plurality of resources.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: transmitting, to a second UE, first control information related to a transmission of a first inter-UE reference signal through a control channel, wherein the first control information may include a combining identifier, ID, related to a first resource and information for the first resource; and transmitting, to the second UE, the first inter-UE reference signal, based on the first resource, wherein combining may be performed for a plurality of resources including the first resource, related to the combining ID.

According to an embodiment of the present disclosure, a non-transitory computer-readable storage medium storing instructions may be proposed. For example, the instructions, based on being executed, may cause a first device to: transmit, to a second device, first control information related to a transmission of a first inter-device reference signal through a control channel, wherein the first control information may include a combining identifier, ID, related to a first resource and information for the first resource; and transmit, to the second device, the first inter-device reference signal, based on the first resource, wherein combining may be performed for a plurality of resources including the first resource, related to the combining ID.

FIG. 18 shows a procedure in which a second device performs wireless communication, according to an embodiment of the present disclosure. The embodiment of FIG. 18 may be combined with various embodiments of the present disclosure.

Referring to FIG. 18, in step S1810, a second device may receive, from a first device, first control information related to a transmission of a first inter-device reference signal through a control channel. For example, the first control information may include a combining identifier, ID, related to a first resource and information for the first resource. In step S1820, the second device may receive, from the first device, the first inter-device reference signal based on the first resource. In step S1830, the second device may receive a plurality of inter-device reference signals based on a plurality of resources, related to the combining ID. In step S1840, the second device may perform combining for the first inter-device reference signal and the plurality of inter-device reference signals, based on the first inter-device reference signal and the plurality of inter-device reference signals being related to the combining ID.

For example, the combining ID may be the same for resources at the same position within each of the slots related to the plurality of resources.

The embodiments described above may be applied to various devices described below. First, a processor 202 of a second device 200 may control a transceiver 206 to receive, from a first device 100, first control information related to a transmission of a first inter-device reference signal through a control channel. For example, the first control information may include a combining identifier, ID, related to a first resource and information for the first resource. And, the processor 202 of the second device 200 may control the transceiver 206 to receive, from the first device 100, the first inter-device reference signal based on the first resource. And, the processor 202 of the second device 200 may control the transceiver 206 to receive a plurality of inter-device reference signals based on a plurality of resources, related to the combining ID. And, the processor 202 of the second device 200 may perform combining for the first inter-device reference signal and the plurality of inter-device reference signals, based on the first inter-device reference signal and the plurality of inter-device reference signals being related to the combining ID.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, first control information related to a transmission of a first inter-device reference signal through a control channel, wherein the first control information may include a combining identifier, ID, related to a first resource and information for the first resource; receiving, from the first device, the first inter-device reference signal based on the first resource; receiving a plurality of inter-device reference signals based on a plurality of resources, related to the combining ID; and performing combining for the first inter-device reference signal and the plurality of inter-device reference signals, based on the first inter-device reference signal and the plurality of inter-device reference signals being related to the combining ID.

For example, the combining ID may be the same for resources at the same position within each of the slots related to the plurality of resources.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

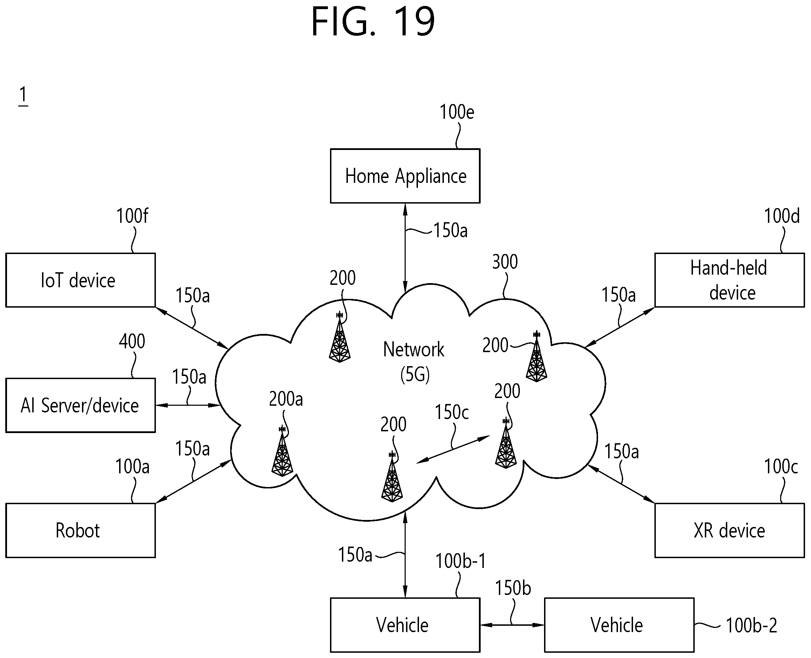

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

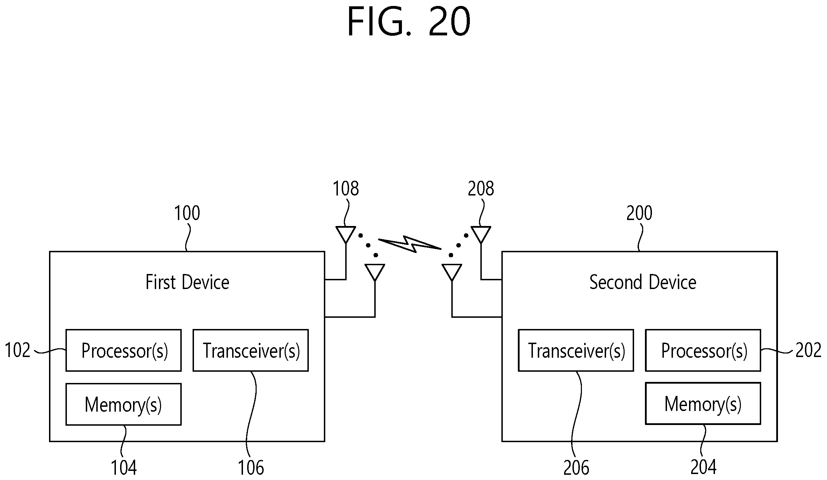

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

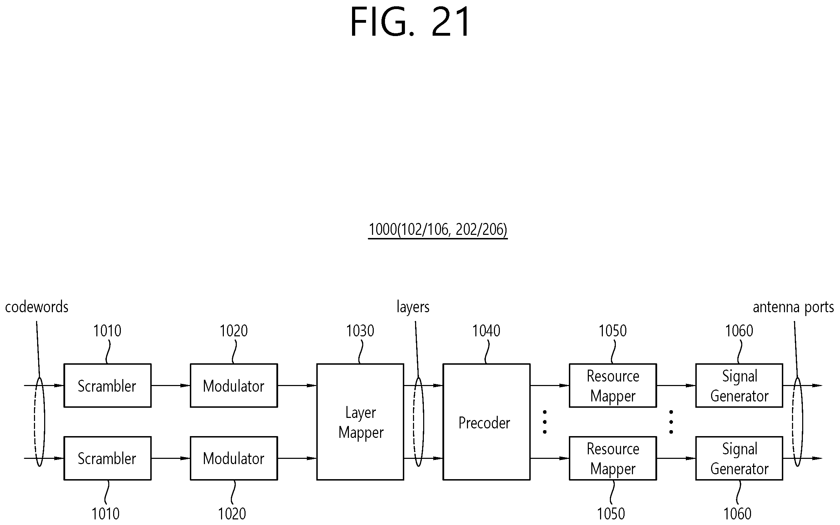

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

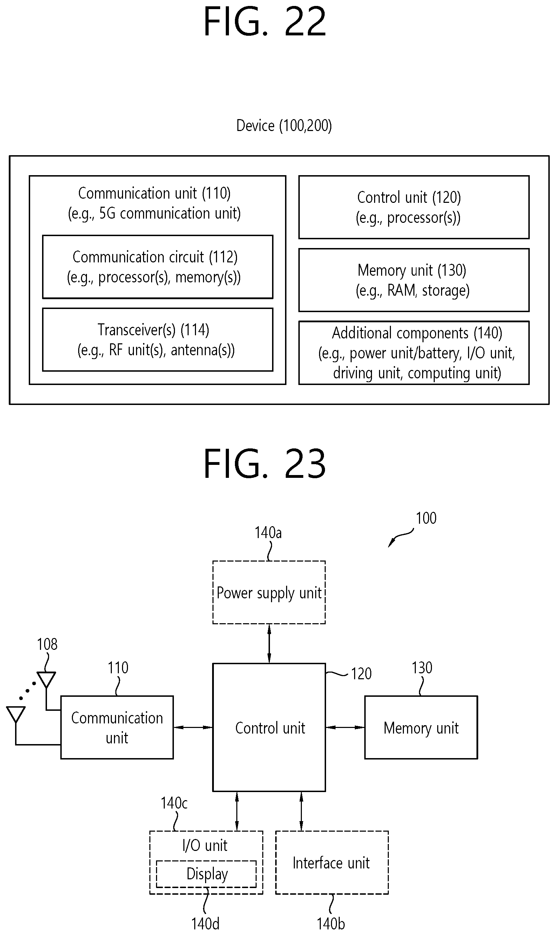

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

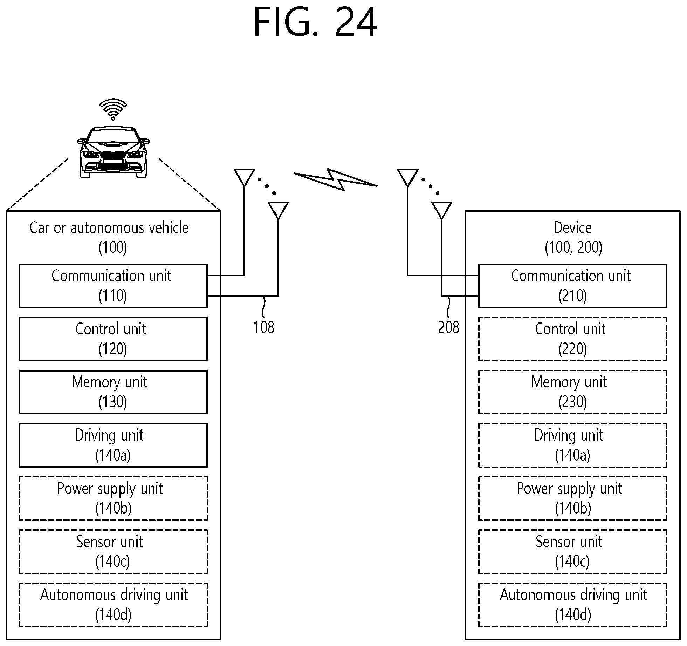

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:

    transmitting, to a second device, first control information related to a transmission of a first inter-device reference signal through a control channel,
    wherein the first control information includes a combining identifier, ID, related to a first resource and information for the first resource; and
    transmitting, to the second device, the first inter-device reference signal, based on the first resource,
    wherein combining is performed for a plurality of resources including the first resource, related to the combining ID.

2. The method of claim 1, wherein the first inter-device reference signal is transmitted based on beamforming.

3. The method of claim 2, wherein the first control information includes a first beam index used for the transmission of the first inter-device reference signal.

4. The method of claim 3, wherein a first destination ID related to the first inter-device reference signal is different from a second destination ID related to a transmission of a second inter-device reference signal, based on a second beam index related to the transmission of the second inter-device reference signal being different from the first beam index.

5. The method of claim 2, wherein the combining ID is used as a beam index.

6. The method of claim 5, wherein beams used for transmissions of a plurality of inter-device reference signals performed based on the plurality of resources are the same, based on the plurality of resources being related to the combining ID.

7. The method of claim 2, wherein the first control information includes a first destination ID related to the first inter-device reference signal,

    wherein a second destination ID related to a second inter-device reference signal is the same as the first destination ID,
    wherein a first beam index used for the transmission of the first inter-device reference signal is different from a second beam index used for the second inter-device reference signal, and
wherein the second inter-device reference signal is received to the second device based on a second resource included in the plurality of resources.

8. The method of claim 7, wherein the combining is performed before completion of beam pairing.

9. The method of claim 1, wherein the combining ID is the same for resources at the same position within each of the slots related to the plurality of resources.

10. The method of claim 9, wherein the combining ID is the same for resources at the same time and frequency position within each of the slots related to the plurality of resources.

11. The method of claim 1, further comprising:

selecting the plurality of resources from among a candidate resource set based on the combining ID,
wherein in the candidate resource set, only resources related to the combining ID and at the same position within each of the slots related to the plurality of resources are included.

12. The method of claim 11, further comprising:
incrementing a reference signal received power threshold value, based on a number of candidate resources related to the combining ID, whose related reference signal received power value is smaller than the reference signal received power threshold value, within a resource selection window being less than a threshold number.

13. The method of claim 1, further comprising:
transmitting, to the second device, a plurality of inter-device reference signals, based on the plurality of resources.

14. A first device for performing wireless communication, the first device comprising:

at least one transceiver;
at least one processor; and
at least one memory operably connected to the at least one processor and storing instructions that, based on being executed by the at least one processor, cause the first device to perform operations,
wherein the operations comprise:

transmitting, to a second device, first control information related to a transmission of a first inter-device reference signal through a control channel,
wherein the first control information includes a combining identifier, ID, related to a first resource and information for the first resource; and
transmitting, to the second device, the first inter-device reference signal, based on the first resource,
wherein combining is performed for a plurality of resources including the first resource, related to the combining ID.

15. A device adapted to control a first user equipment, UE, the device comprising:

at least one processor; and
at least one memory operably connected to the at least one processor and storing instructions that, based on being executed by the at least one processor, cause the first UE to perform operations,
wherein the operations comprise:

transmitting, to a second UE, first control information related to a transmission of a first inter-UE reference signal through a control channel,
wherein the first control information includes a combining identifier, ID, related to a first resource and information for the first resource; and
transmitting, to the second UE, the first inter-UE reference signal, based on the first resource,
wherein combining is performed for a plurality of resources including the first resource, related to the combining ID.

16. A non-transitory computer-readable storage medium storing instructions that, based on being executed, cause a first device to:

transmit, to a second device, first control information related to a transmission of a first inter-device reference signal through a control channel,
wherein the first control information includes a combining identifier, ID, related to a first resource and information for the first resource; and
transmit, to the second device, the first inter-device reference signal, based on the first resource,
wherein combining is performed for a plurality of resources including the first resource, related to the combining ID.

17. A method for performing, by a second device, wireless communication, the method comprising:

receiving, from a first device, first control information related to a transmission of a first inter-device reference signal through a control channel,
wherein the first control information includes a combining identifier, ID, related to a first resource and information for the first resource;
receiving, from the first device, the first inter-device reference signal based on the first resource;
receiving a plurality of inter-device reference signals based on a plurality of resources, related to the combining ID; and
performing combining for the first inter-device reference signal and the plurality of inter-device reference signals, based on the first inter-device reference signal and the plurality of inter-device reference signals being related to the combining ID.

18. The method of claim 17, wherein the combining ID is the same for resources at the same position within each of the slots related to the plurality of resources.

19. A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

receiving, from a first device, first control information related to a transmission of a first inter-device reference signal through a control channel,
wherein the first control information includes a combining identifier, ID, related to a first resource and information for the first resource;
receiving, from the first device, the first inter-device reference signal based on the first resource;
receiving a plurality of inter-device reference signals based on a plurality of resources, related to the combining ID; and
performing combining for the first inter-device reference signal and the plurality of inter-device reference signals, based on the first inter-device reference signal and the plurality of inter-device reference signals being related to the combining ID.

20. The second device of claim 19, wherein the combining ID is the same for resources at the same position within each of the slots related to the plurality of resources.

# FIG. 1

# FIG. 2

Radio | Microwave | Infrared | Visible | Ultraviolet | X-Ray | Gamma-Ray

mmWave | Terahertz

Wavelength

$10^8$ m   1m   10mm   1mm   0.1mm   700nm   390nm   10nm   0.01nm

Radiation Type

Frequency

3 Hz   300 MHz   30 GHz   300 GHz   3 THz   430 THz   730 THz   30 PHz   30 EHz

Mega : $10^6$   Giga : $10^9$   Tera : $10^{12}$   Peta : $10^{15}$   Exa : $10^{18}$

# FIG. 3

Satellite
(or UAS platform)

Service
link

Feeder link

Data network

Gateway

Beam foot
print

User
Equipments

Field of view of the satellite
(or UAS platform)

EP 4 753 352 A1

# FIG. 4

Satellite
(or UAS platform)

Satellite
(or UAS platform)

ISL

Feeder link

Service
link

Feeder link
(mandatory if on ISL)

Data network

Gateway

User
Equipments

Beam foot
print

Field of view of the satellite
(or UAS platform)

# FIG. 5

(a)

(b)

EP 4 753 352 A1

# FIG. 6

Resource grid

A carrier
(up to 3300 subcarriers,
i.e., 275 RBs)

A BWP

1RB=12 subcarriers

1 RE

1subcarrier

1 symbol

l=0 •••

k=0

EP 4 753 352 A1

# FIG. 7

# FIG. 8

(a)

(b)

# FIG. 9

# FIG. 10

# FIG. 11

EP 4 753 352 A1

| UE | NR-Uu / LTE-Uu | NG RAN | | NG-C | AMF | | NLs | LMF |
|---|---|---|---|---|---|---|---|---|
| LPP | | | | | | | | LPP |
| NAS | | | | | RRC Relay | | | HTTP/2 |
| RRC | | RRC Relay | NGAP | | NGAP | HTTP/2 | | |
| PDCP | | PDCP | SCTP | | SCTP | TLS | | TLS |
| | | | | | | TCP | | TCP |
| RLC | | RLC | IP | | IP | IP | | IP |
| MAC | | MAC | L2 | | L2 | L2 | | L2 |
| L1 | | L1 | L1 | | L1 | L1 | | L1 |

# FIG. 12

| NRPPa | | |
|---|---|---|
| NGAP | | |
| SCTP | | |
| IP | | |
| L2 | | |
| L1 | | |

NG RAN

NG-C

| NGAP | HTTP/2 |
|---|---|
| SCTP | TLS |
| | TCP |
| IP | IP |
| L2 | L2 |
| L1 | L1 |

AMF

NLs

| NRPPa |
|---|
| HTTP/2 |
| TLS |
| TCP |
| IP |
| L2 |
| L1 |

LMF

# FIG. 13

BS A
(Anchor cell)

BS B

BS C

# FIG. 14

# FIG. 15

second resource information
first combining ID information

control channel transmission
(S1510)

perform combining
operation
(S1540)

reference
signal
transmitting
device

first reference
signal transmission
(S1520)

reference
signal
receiving
device

second reference
signal transmission
(S1530)

frequency

time

▨ : first resource

▧ : second resource

▦ : third resource

EP 4 753 352 A1

# FIG. 16

frequency

first slot start time point

second slot start time point

time

⬛ : first resource    ⬜ : third resource

⬛ : second resource    ⬛ : fourth resource

EP 4 753 352 A1

# FIG. 17

transmitting, to a second device, first control information related to a transmission of a first inter-device reference signal through a control channel — S1710

transmitting, to a second device, a first inter-device reference signal, based on a first resource — S1720

# FIG. 18

receiving, from a first device, first control information related to a transmission of a first inter-device reference signal through a control channel — S1810

receiving, from a first device, a first inter-device reference signal based on a first resource — S1820

receiving a plurality of inter-device reference signals based on a plurality of resources, related to a combining ID — S1830

performing combining for a first inter-device reference signal and a plurality of inter-device reference signals, based on the first inter-device reference signal and the plurality of inter-device reference signals being related to a combining ID — S1840

# FIG. 19

1

Home Appliance 100e

150a

IoT device 100f

150a

300

Hand-held device 100d

200

150a

AI Server/device 400

150a

Network (5G)

200

200a

150c

200

Robot 100a

150a

200

150a

XR device 100c

150a

Vehicle 100b-1

150b

Vehicle 100b-2

EP 4 753 352 A1

FIG. 20

# FIG. 21

1000(102/106, 202/206)

# FIG. 22

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 23

100

140a

Power supply unit

108

110

Communication
unit

120

Control unit

130

Memory unit

140c

I/O unit

Display

Interface unit

140d

140b

# FIG. 24

Car or autonomous vehicle
(100)

Communication unit
(110)

Control unit
(120)

Memory unit
(130)

Driving unit
(140a)

Power supply unit
(140b)

Sensor unit
(140c)

Autonomous driving unit
(140d)

108

208

Device
(100, 200)

Communication unit
(210)

Control unit
(220)

Memory unit
(230)

Driving unit
(140a)

Power supply unit
(140b)

Sensor unit
(140c)

Autonomous driving unit
(140d)

EP 4 753 352 A1

## INTERNATIONAL SEARCH REPORT

| International application No. |
|---|
| **PCT/KR2024/010578** |

| A. | CLASSIFICATION OF SUBJECT MATTER |
|---|---|

**H04W 72/25**(2023.01)i; **H04B 7/06**(2006.01)i; **H04W 72/0446**(2023.01)i; **H04W 72/0453**(2023.01)i; **H04L 5/00**(2006.01)i; **H04W 92/18**(2009.01)i

According to International Patent Classification (IPC) or to both national classification and IPC

| B. | FIELDS SEARCHED |
|---|---|

Minimum documentation searched (classification system followed by classification symbols)

H04W 72/25(2023.01); H04W 28/26(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 참조신호(reference signal), 제어(control), 컴바이닝(combining), ID, 사이드링크(sidelink)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | EP 4072195 A1 (LG ELECTRONICS INC.) 12 October 2022 (2022-10-12)<br>See paragraphs [0160]-[0166]; and claims 1-17. | 1,13-17,19 |
| A | | 2-12,18,20 |
| Y | US 2020-0077416 A1 (QUALCOMM INCORPORATED) 05 March 2020 (2020-03-05)<br>See paragraphs [0158]-[0162]; and claims 1-50. | 1,13-17,19 |
| A | QUALCOMM INCORPORATED. Measurements and Reporting for SL Positioning. R1-2305342, 3GPP TSG RAN WG1 Meeting #113. 14 May 2023.<br>See section 4.1. | 1-20 |
| A | LG ELECTRONICS. Discussion on resource allocation for SL positioning reference signal. R1-2305636, 3GPP TSG RAN WG1 Meeting #113. 15 May 2023.<br>See section 2. | 1-20 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2024** | **25 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/010578** |

### C.    DOCUMENTS CONSIDERED TO BE RELEVANT

| Category* | Citation of document, with indication, where appropriate, of the relevant passages | Relevant to claim No. |
|---|---|---|
| A | CONTINENTAL AUTOMOTIVE. Considerations on Resource Allocation for Sidelink. R1-2304676, 3GPP TSG RAN WG1 Meeting #113. 15 May 2023. See section 2.2. | 1-20 |
| PX | LG ELECTRONICS. Discussion on resource allocation for SL positioning reference signal. R1-2307983, 3GPP TSG RAN WG1 Meeting #114. 11 August 2023. See section 2. | 1,14-17,19 |

Form PCT/ISA/210 (second sheet) (July 2022)

**INTERNATIONAL SEARCH REPORT**
Information on patent family members

International application No.

**PCT/KR2024/010578**

| Patent document cited in search report | | | Publication date (day/month/year) | Patent family member(s) | | | Publication date (day/month/year) |
|---|---|---|---|---|---|---|---|
| EP | 4072195 | A1 | 12 October 2022 | KR | 10-2021-0071428 | A | 16 June 2021 |
| | | | | KR | 10-2022-0091509 | A | 30 June 2022 |
| | | | | US | 2022-0416976 | A1 | 29 December 2022 |
| | | | | WO | 2021-112610 | A1 | 10 June 2021 |
| US | 2020-0077416 | A1 | 05 March 2020 | CN | 112602285 | A | 02 April 2021 |
| | | | | CN | 112602285 | B | 26 April 2024 |
| | | | | EP | 3844904 | A1 | 07 July 2021 |
| | | | | KR | 10-2021-0047873 | A | 30 April 2021 |
| | | | | SG | 11202100458 | A | 30 March 2021 |
| | | | | TW | 202015374 | A | 16 April 2020 |
| | | | | TW | I802745 | B | 21 May 2023 |
| | | | | US | 11234252 | B2 | 25 January 2022 |
| | | | | US | 11758533 | B2 | 12 September 2023 |
| | | | | US | 2022-0240270 | A1 | 28 July 2022 |
| | | | | US | 2024-0008029 | A1 | 04 January 2024 |
| | | | | WO | 2020-047079 | A1 | 05 March 2020 |

Form PCT/ISA/210 (patent family annex) (July 2022)